# EUROPEAN PATENT APPLICATION

(11) **EP 4 468 782 A1**
(43) Date of publication of application: **27.11.2024**
(21) Application number: 23755765.7
(22) Date of filing: 14.02.2023
(51) Int. Cl.: H04W 28/04

(54) **COMMUNICATION METHOD AND COMMUNICATION APPARATUS**

(30) Priority: 17.02.2022 CN 202210147397; 28.04.2022 CN 202210460362
(71) Applicant: Huawei Technologies Co., Ltd., Shenzhen, Guangdong 518129 (CN)
(72) Inventor: CAI, Yu, Shenzhen, Guangdong 518129 (CN); XU, Haibo, Shenzhen, Guangdong 518129 (CN); XUE, Lixia, Shenzhen, Guangdong 518129 (CN)
(74) Representative: Pfenning, Meinig & Partner mbB
(86) International application number: PCT/CN2023/075842
(87) International publication number: WO 2023/155763

(57) **Abstract**

A communication method and a communication apparatus are provided. The method includes: A first terminal device sends data to a second terminal device over a plurality of carriers through a sidelink SL. The first terminal device determines feedback reception situations for the data on feedback reception occasions over the plurality of carriers, where the feedback reception occasion is a feedback reception occasion for the data. The first terminal device determines, based on the feedback reception situations, whether an SL radio link failure RLF occurs between the first terminal device and the second terminal device. According to this application, the SL RLF can be processed when transmission with one PC5-RRC connection is performed over the plurality of carriers. This helps improve communication reliability.

## Description

This application claims priorities to Chinese Patent Application No. 202210147397.1, filed with the China National Intellectual Property Administration on February 17, 2022 and entitled "SL RLF PROCESSING METHOD", and to Chinese Patent Application No. 202210460362.3, filed with the China National Intellectual Property Administration on April 28, 2022 and entitled "COMMUNICATION METHOD AND COMMUNICATION APPARATUS", both of which are incorporated herein by reference in their entireties.

### TECHNICAL FIELD

This application relates to the field of communication technologies, and in particular, to a communication method and a communication apparatus.

### BACKGROUND

The 3rd generation partnership project (the 3rd generation partnership project, 3GPP) has been developing standards for sidelink (sidelink, SL) as a tool for user equipment (user equipment, UE) to UE direct communication required in various use cases since long term evolution (long term evolution, LTE). Sidelink communication includes a unicast communication mode. Specifically, in the unicast communication mode, a PC5 radio resource control (radio resource control, RRC) connection (PC5-RRC connection) usually needs to be established between a source UE and a target UE. One UE may have a plurality of PCS-RRC connections to one or more UEs. Currently, transmission with one PC5-RRC connection is performed over only one carrier. If an SL radio link failure (radio link failure, RLF) is caused by the carrier, a terminal device releases the PC5-RRC connection. However, no solution has been proposed for how to process an SLRLF when transmission with one PC5-RRC connection is performed over a plurality of carriers, reducing communication reliability.

### SUMMARY

This application provides a communication method and a communication apparatus, so that an SL RLF can be processed when transmission with one PC5-RRC connection is performed over a plurality of carriers. This helps improve communication reliability.

According to a first aspect, this application provides a communication method. The method is applied to a first terminal device, and the method includes:
sending data to a second terminal device over a plurality of carriers through a sidelink SL;
determining feedback reception situations for the data on feedback reception occasions over the plurality of carriers, where the feedback reception occasion is a feedback reception occasion for the data; and
determining, based on the feedback reception situations, whether an SL radio link failure RLF occurs between the first terminal device and the second terminal device.

In this application, when transmission with one PC5-RRC connection is performed over the plurality of carriers, HARQ-based SL RLF detection can be performed on the plurality of carriers, so that when the transmission with one PC5-RRC connection is performed over the plurality of carriers, it can be determined whether the SL radio link failure RLF occurs between the first terminal device and the second terminal device. The data may be a PSSCH or a MAC PDU, a feedback for the data may be a HARQ feedback or a PSFCH, and the feedback reception occasion may be understood as a PSFCH feedback reception occasion.

In a possible implementation, the determining feedback reception situations for the data on feedback reception occasions over the plurality of carriers includes:
sequentially determining whether the feedback for the data is received on each feedback reception occasion over each of the plurality of carriers; and
the determining, based on the feedback reception situations, whether an SL RLF occurs between the first terminal device and the second terminal device includes:
   if a first quantity of consecutive times that no feedback for the data is received over the plurality of carriers is greater than or equal to a first threshold, determining that the SL RLF occurs between the first terminal device and the second terminal device.

In this implementation, when the transmission with one PC5-RRC connection is performed over the plurality of carriers, statistics on PSFCH reception occasions related to transmission of each PSSCH/MAC PDU over each carrier may be collected together, to determine whether the SL RLF occurs on the PC5-RRC connection.

In a possible implementation, after the sequentially determining whether the feedback for the data is received on each feedback reception occasion over each of the plurality of carriers, the method further includes:
if the first quantity of consecutive times that no feedback for the data is received over the plurality of carriers is less than the first threshold, and a feedback for the data is received on a next feedback reception occasion, setting the first quantity to 0; or
if the first quantity of consecutive times that no feedback for the data is received over the plurality of carriers is less than the first threshold, and no feedback for the data is received on a next feedback reception occasion, adding the first quantity by 1.

In a possible implementation, the determining feedback reception situations for the data on feedback reception occasions over the plurality of carriers includes:
sequentially determining whether a feedback for the data is received on each feedback reception occasion over a first carrier, where the first carrier is any one of the plurality of carriers; and
the determining, based on the feedback reception situations, whether an SL RLF occurs between the first terminal device and the second terminal device includes:
   if a second quantity of consecutive times that no feedback for the data is received over the first carrier is greater than or equal to a second threshold, determining that the SL RLF occurs between the first terminal device and the second terminal device over the first carrier.

In this implementation, when the transmission with one PC5-RRC connection is performed over the plurality of carriers, statistics on PSFCH reception occasions related to transmission of PSSCH/MAC PDUs over different carriers may be collected separately, to determine whether the SL RLF occurs over a specific carrier on the PC5-RRC connection. It should be noted that, in this implementation, when statistics on the PSFCH reception occasion over any carrier are collected, the PSFCH reception occasion may include a PSFCH reception occasion corresponding to data sent over the carrier, and/or the PSFCH reception occasion may include a PSFCH reception occasion corresponding to data sent over another carrier.

In a possible implementation, after the sequentially determining whether a feedback for the data is received on each feedback reception occasion over a first carrier, the method further includes:
if the second quantity of consecutive times that no feedback for the data is received over the first carrier is less than the second threshold, and a feedback for the data is received on a next feedback reception occasion, setting the second quantity to 0; or
if the second quantity of consecutive times that no feedback for the data is received over the first carrier is less than the second threshold, and no feedback for the data is received on a next feedback reception occasion, adding the second quantity by 1.

In a possible implementation, the determining feedback reception situations for the data on feedback reception occasions over the plurality of carriers includes:
sequentially determining whether a feedback for first data sent over a first carrier is received on each feedback reception occasion for the first data, where the first carrier is any one of the plurality of carriers; and
the determining, based on the feedback reception situations, whether an SL RLF occurs between the first terminal device and the second terminal device includes:
   if a third quantity of consecutive times that no feedback for the first data is received is greater than or equal to a third threshold, determining that the SL RLF occurs between the first terminal device and the second terminal device over the first carrier.

In this implementation, when the transmission with one PC5-RRC connection is performed over the plurality of carriers, statistics on PSFCH reception occasions related to transmission of PSSCH/MAC PDUs over different carriers may be collected separately, to determine whether the SL RLF occurs over a specific carrier on the PC5-RRC connection. It should be noted that, in this implementation, when statistics on the PSFCH reception occasion over any carrier are collected, the PSFCH reception occasion includes only a PSFCH reception occasion corresponding to data sent over the carrier.

In a possible implementation, after the sequentially determining whether a feedback for first data sent over a first carrier is received on each feedback reception occasion for the first data, the method further includes:
if the third quantity of consecutive times that no feedback for the first data is received over the first carrier is less than the third threshold, and a feedback for the first data is received on a next feedback reception occasion for the first data, setting the third quantity to 0; or
if the third quantity of consecutive times that no feedback for the first data is received over the first carrier is less than the third threshold, and no feedback for the first data is received on a next feedback reception occasion for the first data, adding the third quantity by 1.

In a possible implementation, the method further includes:
sending first indication information to the second terminal device, where the first indication information indicates that the SL RLF occurs over the first carrier, or the first indication information indicates to delete or release the first carrier.

In this implementation, when the first terminal device determines that the SL RLF occurs over the first carrier, the first terminal device sends the first indication information to the second terminal device, to notify the second terminal device to delete or release the first carrier over which the SL RLF occurs. This reduces unnecessary communication interruption caused by directly releasing the PC5-RRC connection in a conventional technology when the SL RLF is discovered. In other words, in embodiments of this application, the first carrier over which the SL RLF specifically occurs may be determined, and when the first carrier over which the SL RLF specifically occurs is determined, only the first carrier is deleted or released, and another carrier over which the SL RLF does not occur may still be used for normal communication between the first terminal device and the second terminal device. This improves communication reliability.

In a possible implementation, the method further includes:
deleting or releasing the first carrier.

In this implementation, when the first terminal device determines that the SL RLF occurs over the first carrier, the first terminal device may also delete or release the first carrier over which the SL RLF occurs, to save storage resources, and therefore improve the communication reli ability.

In a possible implementation, the method further includes:
sending second indication information to an access network device, where the second indication information indicates that the SL RLF occurs over the first carrier.

In this implementation, when the first terminal device determines that the SL RLF occurs over the first carrier, if there is an RRC connection between the first terminal device and the access network device, the first terminal device may further send the second indication information to the access network device through the RRC connection, to notify the access network device of a specific carrier over which the SL RLF occurs. Therefore, the access network device may no longer schedule the first terminal device to send data to the second terminal device by using the first carrier, thereby improving the communication reliability.

According to a second aspect, this application provides a communication method. The method is applied to a first terminal device, and the method includes:
determining that a sidelink SL radio link failure RLF occurs over a first carrier, where the first carrier is any one or more of a plurality of carriers used by the first terminal device to send data to a second terminal device; and
sending first indication information to the second terminal device, where the first indication information indicates the first carrier, or the first indication information indicates to delete or release the first carrier.

In this application, when the first terminal device determines that the SL RLF occurs over the first carrier, the first terminal device sends the first indication information to the second terminal device, to notify the second terminal device to delete or release the first carrier over which the SL RLF occurs. This reduces unnecessary communication interruption caused in a conventional technology in which a PC5-RRC connection is directly released when an SL RLF is discovered. In other words, in embodiments of this application, the first carrier over which the SL RLF specifically occurs may be determined, and when the first carrier over which the SL RLF specifically occurs is determined, only the first carrier is deleted or released, and another carrier over which the SL RLF does not occur may still be used for normal communication between the first terminal device and the second terminal device. This improves communication reliability.

In a possible implementation, the determining that an SL RLF occurs over a first carrier includes:
if a quantity of data retransmissions determined based on a first radio link control RLC entity reaches a maximum quantity of retransmissions, determining that the SL RLF occurs over the first carrier associated with the first RLC entity, where the first terminal device sends the data to the second terminal device through the first RLC entity.

In this implementation, if the first terminal device determines that an RLC SDU that is transmitted by an RLC entity and whose quantity of transmissions reaches the maximum quantity of retransmissions (including initially transmitted or retransmitted) over one or more carriers, the first terminal device may determine that a carrier that causes the SL RLF is one or more carriers associated with the RLC entity. In other words, the first carrier is one or more carriers associated with the first RLC entity.

In a possible implementation, the determining that the SL RLF occurs over the first carrier associated with the first RLC entity includes:
if the quantity of data retransmissions determined based on the first radio link control RLC entity reaches the maximum quantity of retransmissions, and the first RLC entity is an RLC entity corresponding to a packet data convergence protocol PDCP entity that uses packet duplication, determining that the SL RLF occurs over the first carrier associated with the first RLC entity.

In this implementation, if the RLC entity that causes the SL RLF is the RLC entity corresponding to the PDCP entity that uses the packet duplication, and transmission performed by the RLC entity is mapped to a carrier set (which may also be understood as a carrier set corresponding to a logical channel corresponding to the RLC entity), the first terminal device may determine that a carrier in the carrier set causes the SL RLF. In other words, the first carrier is one or more carriers in the carrier set.

In a possible implementation, the first carrier includes a plurality of carriers; and after the determining that an SL RLF occurs over a first carrier, the method further includes:
sending first information to the second terminal device over each carrier in the first carrier, where the first information is used to trigger the second terminal device to feed back second information; and
if the second information sent by the second terminal device is not received over a second carrier, determining that the SL RLF occurs over the second carrier, where the second carrier is any carrier in the first carrier.

In this implementation, once the SL RLF occurs, the first terminal device sends the first information to a peer UE (namely, the second terminal device) over each carrier in the first carrier, and receives the second information from the second terminal device. The first information and the second information may be used to determine a specific carrier or specific carriers in the first carrier that cause the SL RLF.

In a possible implementation, the method further includes:
deleting or releasing the first carrier.

In this implementation, when the first terminal device determines that the SL RLF occurs over the first carrier, the first terminal device may also delete or release the first carrier over which the SL RLF occurs, to save storage resources, and therefore improve the communication reli ability.

In a possible implementation, the method further includes:
sending second indication information to an access network device, where the second indication information indicates that the SL RLF occurs over the first carrier.

In this implementation, when the first terminal device determines that the SL RLF occurs over the first carrier, if there is an RRC connection between the first terminal device and the access network device, the first terminal device may further send the second indication information to the access network device through the RRC connection, to notify the access network device of a specific carrier over which the SL RLF occurs. Therefore, the access network device may no longer schedule the first terminal device to send data to the second terminal device by using the first carrier, thereby improving the communication reliability.

According to a third aspect, this application provides a communication apparatus. The apparatus is a first terminal device, and the apparatus includes:
a transceiver unit, configured to send data to a second terminal device over a plurality of carriers through a sidelink SL; and
a processing unit, configured to determine feedback reception situations for the data on feedback reception occasions over the plurality of carriers, where the feedback reception occasion is a feedback reception occasion for the data.

The processing unit is configured to determine, based on the feedback reception situations, whether an SL radio link failure RLF occurs between the first terminal device and the second terminal device.

In a possible implementation, the processing unit is configured to:
sequentially determine whether a feedback for the data is received on each feedback reception occasion over each of the plurality of carriers; and
if a first quantity of consecutive times that no feedback for the data is received over the plurality of carriers is greater than or equal to a first threshold, determine that the SL RLF occurs between the first terminal device and the second terminal device.

In a possible implementation, after the processing unit sequentially determines whether the feedback for the data is received on each feedback reception occasion over each of the plurality of carriers, the processing unit is further configured to:
if the first quantity of consecutive times that no feedback for the data is received over the plurality of carriers is less than the first threshold, and a feedback for the data is received on a next feedback reception occasion, set the first quantity to 0; or
if the first quantity of consecutive times that no feedback for the data is received over the plurality of carriers is less than the first threshold, and no feedback for the data is received on a next feedback reception occasion, add the first quantity by 1.

In a possible implementation, the processing unit is configured to:
sequentially determine whether a feedback for the data is received on each feedback reception occasion over a first carrier, where the first carrier is any one of the plurality of carriers; and
if a second quantity of consecutive times that no feedback for the data is received over the first carrier is greater than or equal to a second threshold, determine that the SL RLF occurs between the first terminal device and the second terminal device over the first carrier.

In a possible implementation, after the processing unit sequentially determines whether the feedback for the data is received on each feedback reception occasion over each of the plurality of carriers, the processing unit is further configured to:
if the second quantity of consecutive times that no feedback for the data is received over the first carrier is less than the second threshold, and a feedback for the data is received on a next feedback reception occasion, set the second quantity to 0; or
if the second quantity of consecutive times that no feedback for the data is received over the first carrier is less than the second threshold, and no feedback for the data is received on a next feedback reception occasion, add the second quantity by 1.

In a possible implementation, the processing unit is configured to:
sequentially determine whether a feedback for first data sent over a first carrier is received on each feedback reception occasion for the first data, where the first carrier is any one of the plurality of carriers; and
if a third quantity of consecutive times that no feedback for the first data is received is greater than or equal to a third threshold, determine that the SL RLF occurs between the first terminal device and the second terminal device over the first carrier.

In a possible implementation, after the processing unit sequentially determines whether the feedback for the data is received on each feedback reception occasion over each of the plurality of carriers, the processing unit is further configured to:
if the third quantity of consecutive times that no feedback for the first data is received over the first carrier is less than the third threshold, and a feedback for the first data is received on a next feedback reception occasion for the first data, set the third quantity to 0; or
if the third quantity of consecutive times that no feedback for the first data is received over the first carrier is less than the third threshold, and no feedback for the first data is received on a next feedback reception occasion for the first data, add the third quantity by 1.

In a possible implementation, the transceiver unit is further configured to:
send first indication information to the second terminal device, where the first indication information indicates that the SL RLF occurs over the first carrier, or the first indication information indicates to delete or release the first carrier.
In a possible implementation, the processing unit is further configured to: delete or release the first carrier.

In a possible implementation, the transceiver unit is further configured to:
send second indication information to an access network device, where the second indication information indicates that the SL RLF occurs over the first carrier.

According to a fourth aspect, this application provides a communication apparatus. The apparatus is a first terminal device, and the apparatus includes:
a processing unit, configured to determine that a sidelink SL radio link failure RLF occurs over a first carrier, where the first carrier is any one or more of a plurality of carriers used by the first terminal device to send data to a second terminal device; and
a transceiver unit, configured to send first indication information to the second terminal device, where the first indication information indicates the first carrier, or the first indication information indicates to delete or release the first carrier.

In a possible implementation, the processing unit is configured to:
if a quantity of data retransmissions determined based on a first radio link control RLC entity reaches a maximum quantity of retransmissions, determine that the SL RLF occurs over the first carrier associated with the first RLC entity, where the first terminal device sends the data to the second terminal device through the first RLC entity.

In a possible implementation, the processing unit is configured to:
if the quantity of data retransmissions determined based on the first radio link control RLC entity reaches the maximum quantity of retransmissions, and the first RLC entity is an RLC entity corresponding to a packet data convergence protocol PDCP entity that uses packet duplication, determine that the SL RLF occurs over the first carrier associated with the first RLC entity.

In a possible implementation, the first carrier includes a plurality of carriers; and after the processing unit determines that the SL RLF occurs over the first carrier, the processing unit is further configured to:
send first information to the second terminal device over each carrier in the first carrier, where the first information is used to trigger the second terminal device to feed back second information; and
if the second information sent by the second terminal device is not received over a second carrier, determine that the SL RLF occurs over the second carrier, where the second carrier is any carrier in the first carrier.

In a possible implementation, the processing unit is further configured to:
delete or release the first carrier.

In a possible implementation, the transceiver unit is further configured to:
send second indication information to an access network device, where the second indication information indicates that the SL RLF occurs over the first carrier.

According to a fifth aspect, this application provides a communication apparatus. The apparatus may be a terminal device (for example, a first terminal device or a second terminal device), may be an apparatus in the terminal device, or may be an apparatus that can be used with the terminal device in a matched manner. The communication apparatus may alternatively be a chip system. The communication apparatus may perform the method according to the first aspect and/or the second aspect. A function of the communication apparatus may be implemented by hardware, or may be implemented by hardware executing corresponding software. The hardware or the software includes one or more units or modules corresponding to the foregoing function. The unit or module may be software and/or hardware. For operations performed by the communication apparatus and beneficial effects thereof, refer to the method according to the first aspect and/or the second aspect, and the beneficial effects thereof. Repeated content is not described again.

According to a sixth aspect, this application provides a communication apparatus. The apparatus may be a terminal device (for example, a first terminal device or a second terminal device). The communication apparatus includes a processor and a transceiver. The processor and the transceiver are configured to execute a computer program or instructions stored in at least one memory, so that the apparatus implements the method according to any one of the first aspect and/or the second aspect.

According to a seventh aspect, this application provides a communication apparatus. The apparatus may be a terminal device (for example, a first terminal device or a second terminal device). The communication apparatus includes a processor, a transceiver, and a memory. The processor, the transceiver, and the memory are coupled. The processor and the transceiver are configured to implement the method according to any one of the first aspect and/or the second aspect.

According to an eighth aspect, this application provides a computer-readable storage medium. The storage medium stores a computer program or instructions, and when the computer program or the instructions are executed by a computer, the method according to any one of the first aspect to the fourth aspect is implemented.

According to a ninth aspect, this application provides a computer program product including instructions. The computer program product includes computer program code, and when the computer program code is run on a computer, the method according to any one of the first aspect to the fourth aspect is implemented.

### BRIEF DESCRIPTION OF DRAWINGS

FIG. 1 is a diagram of an architecture of a communication system according to an embodiment of this application;
FIG. 2 is a schematic flowchart of a communication method according to an embodiment of this application;
FIG. 3 is a diagram of a scenario of determining an SL RLF according to an embodiment of this application;
FIG. 4 is a diagram of another scenario of determining an SL RLF according to an embodiment of this application;
FIG. 5 is a diagram of another scenario of determining an SL RLF according to an embodiment of this application;
FIG. 6 is a diagram of another scenario of determining an SL RLF according to an embodiment of this application;
FIG. 7a is a diagram of another scenario of determining an SL RLF according to an embodiment of this application;
FIG. 7b is a diagram of another scenario of determining an SL RLF according to an embodiment of this application;
FIG. 8 is another schematic flowchart of a communication method according to an embodiment of this application;
FIG. 9 is a diagram of a structure of a communication apparatus according to an embodiment of this application; and
FIG. 10 is a diagram of a structure of another communication apparatus according to an embodiment of this application.

### DESCRIPTION OF EMBODIMENTS

The following describes the technical solutions in embodiments of this application with reference to the accompanying drawings in embodiments of this application.

The terms "system" and "network" may be used interchangeably in embodiments of this application. Unless otherwise specified, "/" represents an "or" relationship between associated objects. For example, A/B may represent A or B. The term "and/or" in this application is merely an association relationship for describing associated objects, and represents that three relationships may exist. For example, A and/or B may represent the following three cases: Only A exists, both A and B exist, and only B exists, where A and B may be singular or plural. In addition, in descriptions of this application, unless otherwise specified, "a plurality of" means two or more than two. "At least one of the following items (pieces)" or a similar expression thereof refers to any combination of these items, including any combination of singular items (pieces) or plural items (pieces). For example, at least one (piece) of a, b, or c may represent a, b, c, a-b, a-c, b-c, or a-b-c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in still some other embodiments" that appear in different parts in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

It should be understood that the technical solutions in embodiments of this application may be applied to a long term evolution (long term evolution, LTE) architecture, a fifth generation mobile communication technology (5th generation mobile networks, 5G), a wireless local area network (wireless local area network, WLAN) system, a V2X communication system, and the like. The technical solutions in embodiments of this application may be further applied to another future communication system, for example, a 6G communication system. In the future communication system, a same function may be maintained, but a name may be changed.

The following describes a basic architecture of a communication system provided in embodiments of this application.

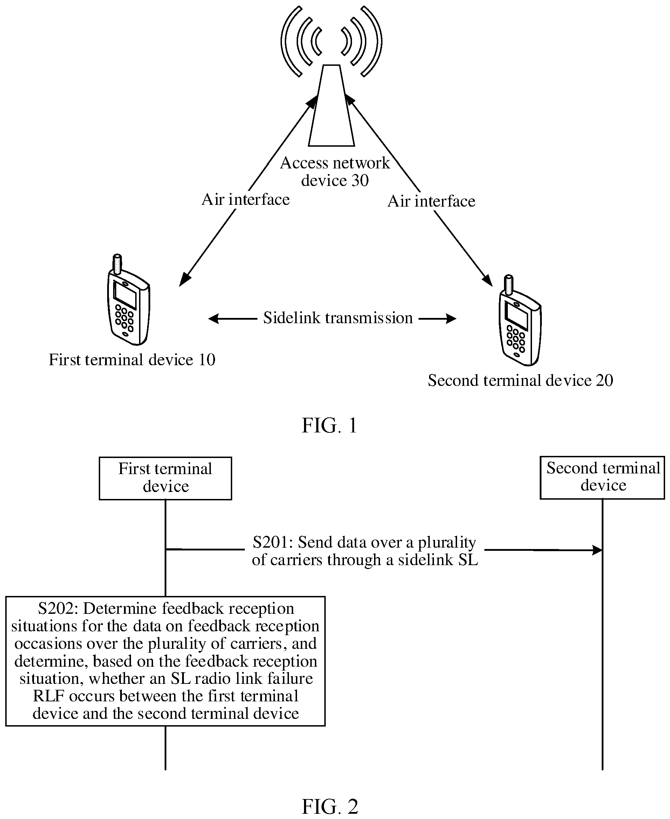

FIG. 1 is a diagram of an architecture of a communication system according to an embodiment of this application. As shown in FIG. 1, the communication system may include a first terminal device 10 and a second terminal device 20 that performs SL communication with the first terminal device 10. FIG. 1 is merely a diagram, and does not constitute a limitation on a scenario to which the technical solutions provided in this application are applicable.

The first terminal device 10 and the second terminal device 20 are user-side entities configured to receive a signal, or send a signal, or receive and send a signal. The first terminal device 10 and the second terminal device 20 are configured to provide one or more of a voice service and a data connectivity service for a user. The first terminal device 10 and the second terminal device 20 may be devices that include a wireless transceiver function and that can work together with an access network device to provide a communication service for the user. Specifically, the first terminal device 10 and the second terminal device 20 may be user equipments (user equipments, UEs), access terminals, subscriber units, subscriber stations, mobile stations, remote stations, remote terminals, mobile devices, terminals, wireless communication devices, user agents, user apparatuses, or roadside units (roadside units, RSUs). The first terminal device 10 and the second terminal device 20 may alternatively be uncrewed aerial vehicles, internet of things (internet of things, IoT) devices, stations (stations, STs) in a WLAN, cellular phones (cellular phones), smartphones (smartphones), cordless phones, wireless data cards, tablet computers, session initiation protocol (session initiation protocol, SIP) phones, wireless local loop (wireless local loop, WLL) stations, personal digital assistant (personal digital assistant, PDA) devices, laptop computers (laptop computers), machine-type communication (machine-type communication, MTC) terminals, handheld devices with a wireless communication function, computing devices or other processing devices connected to a wireless modem, vehicle-mounted devices, wearable devices (also referred to as wearable intelligent devices), virtual reality (virtual reality, VR) terminals, augmented reality (augmented reality, AR) terminals, wireless terminals in industrial control (industrial control), wireless terminals in self driving (self driving), wireless terminals in telemedicine (telemedicine), wireless terminals in a smart grid (smart grid), wireless terminals in transportation safety (transportation safety), wireless terminals in a smart city (smart city), wireless terminals in a smart home (smart home), or the like. The first terminal device 10 and the second terminal device 20 may alternatively be devices in device-to-device (device to device, D2D) communication, for example, electric meters and water meters. The first terminal device 10 and the second terminal device 20 may alternatively be terminals in a 5G system, or terminals in a next-generation communication system. This is not limited in this embodiment of this application.

It may be understood that the first terminal device 10 may further perform SL communication with a terminal device other than the second terminal device 20, and the second terminal device 20 may further perform SL communication with a terminal device other than the first terminal device 10. This is not limited herein.

The communication system may further include one or more access network devices 30 (only one is shown). In this application, the first terminal device 10 and the second terminal device 20 may be located within coverage of a same access network device; or the first terminal device 10 and the second terminal device 20 may be located within coverage of different access network devices; or the first terminal device 10 is located within coverage of the access network device, and the second terminal device 20 is located out of coverage (out of coverage) of the access network device; or the first terminal device 10 is located out of coverage of the access network device, and the second terminal device 20 is located within coverage of the access network device. This is not limited herein.

The access network device 30 is a network-side entity configured to send a signal, receive a signal, or send and receive a signal. The access network device 30 may be an apparatus that is deployed in a radio access network (radio access network, RAN) and that provides a wireless communication function for the first terminal device 10 and the second terminal device 20, for example, may be a transmission reception point (transmission reception point, TRP), a base station, or a control node having various forms, for example, a network controller, a radio controller, or a radio controller in a cloud radio access network (cloud radio access network, CRAN) scenario. Specifically, the access network device may be a macro base station having various forms, a micro base station (also referred to as a small cell), a relay station, an access point (access point, AP), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseBand unit, BBU), a transmission reception point (transmitting reception point, TRP), a transmitting point (transmitting point, TP), a mobile switching center, or the like, or may be an antenna panel of a base station. The control node may be connected to a plurality of base stations, and configure resources for a plurality of terminals covered by the plurality of base stations. In systems using different radio access technologies, names of devices having a base station function may be different. For example, the access network device 30 may be an evolved NodeB (evolved NodeB, eNB or eNodeB) in an LTE system, or may be the radio controller in the cloud radio access network (cloud radio access network, CRAN) scenario, or may be a gNB in 5G. Alternatively, the access network device 30 may be a relay station, an access point, a vehicle-mounted device, a wearable device, a network-side device in a post-5G network, or an access network device in a future evolved PLMN network. A specific name of the access network device is not limited in this application.

It should be noted that the technical solutions provided in this embodiment of this application are applicable to a plurality of system architectures. The network architecture and the service scenario described in this embodiment of this application are intended to describe the technical solutions in this embodiment of this application more clearly, and do not constitute a limitation on the technical solutions provided in this embodiment of this application. A person of ordinary skill in the art may know that, with the evolution of the network architecture and the emergence of new service scenarios, the technical solutions provided in embodiments of this application are also applicable to similar technical problems.

To facilitate understanding of related content in embodiments of this application, the following describes some knowledge required in the solutions in this application. It should be noted that these explanations are intended to facilitate understanding of embodiments of this application, but should not be considered as a limitation on the protection scope claimed in this application.

### 1. Sidelink (sidelink, SL)

The SL is defined for direct communication between terminal devices. To be specific, the SL is a link on which the terminal devices directly communicate with each other without forwarding by a base station.

Sidelink transmission is performed between a pair of a source (source) and a destination (destination). The source may be identified by a source layer-2 (layer-2) ID, and the destination may be identified by a destination layer-2 ID. The source layer-2 ID identifies a sender (sender) UE of data in sidelink communication, and the destination layer-2 ID identifies a target (target) or receiver UE of the data in the sidelink communication. The sender is a source of the sidelink communication (or a MAC PDU), and the receiver is a destination of the sidelink communication (or a MAC PDU).

A UE in the following descriptions includes but is not limited to a UE identified by a layer-2 ID, and the UE uses the layer-2 ID in the sidelink communication.

The sidelink communication includes a unicast communication mode. For sidelink unicast communication, a PC5-RRC connection (PC5-RRC connection) is a logical connection between two UEs identified by a pair of the source layer-2 ID and the destination layer-2 ID. The connection is considered to be established after a corresponding PC5 unicast link is established. One UE may have a plurality of PC5-RRC connections to one or more UEs, where the plurality of PC5-RRC connections are for different source-destination layer-2 ID pairs.

### 2. PC5 reference point/interface

The PC5 reference point/interface is a reference point/interface between UEs.

### 3. Uu reference point/interface

The Uu reference point/interface is a reference point/interface between a UE and a radio access network (for example, an NG-RAN or an E-UTRAN).

### 4. Packet duplication

NR sidelink communication may support sidelink packet duplication (packet duplication), which is performed at a PDCP layer of a UE. For the sidelink packet duplication for transmission, a PDCP PDU is duplicated at a PDCP entity. Duplicated PDCP PDUs of a same PDCP entity are submitted to two different RLC entities, and are associated to two different sidelink logical channels respectively. The duplicated PDCP PDUs of the same PDCP entity are only allowed to be transmitted over different sidelink carriers. The different sidelink logical channels corresponding to the same PDCP entity may be mapped to carriers in different carrier sets. For example, the PDCP entity corresponds to a logical channel 1 and a logical channel 2, the logical channel 1 is mapped to a carrier in a carrier set 1, and the logical channel 2 is mapped to a carrier in a carrier set 2. Each carrier set may include one or more carriers.

It should be noted that the 3rd generation partnership project (the 3rd generation partnership project, 3GPP) has been developing standards for sidelink (sidelink, SL) as a tool for user equipment (user equipment, UE) to UE direct communication required in various use cases since long term evolution (long term evolution, LTE). Sidelink communication includes a unicast communication mode. Specifically, in the unicast communication mode, a PC5-radio resource control (radio resource control, RRC) connection (PC5-RRC connection) usually needs to be established between a source UE and a target UE. One UE may have a plurality of PC5-RRC connections to one or more UEs. Currently, transmission with one PC5-RRC connection is performed over only one carrier. If an SL radio link failure (radio link failure, RLF) is caused by the carrier, a terminal device releases the PC5-RRC connection. However, no solution has been proposed for how to process an SL RLF when transmission with one PC5-RRC connection is performed over a plurality of carriers.

Based on this, embodiments of this application provide a communication method, so that the SL RLF can be processed when the transmission with one PC5-RRC connection is performed over the plurality of carriers.

It should be noted that a "feedback for data" in this embodiment of this application may also be described as a "feedback associated with data", and "receiving a feedback over a carrier" in this embodiment of this application may also be described as "receiving a feedback on a carrier". This is not limited herein.

It should be noted that "data" sent by a first terminal device to a second terminal device in this embodiment of this application may be understood as a physical sidelink shared channel (physical sidelink shared channel, PSSCH) or a medium access control (medium access control, MAC) protocol data unit (protocol data unit, PDU). In other words, the data in this embodiment of this application may be carried on the PSSCH for transmission.

It should be noted that, in this embodiment of this application, the "feedback for data" may be understood as the "physical sidelink feedback channel (physical sidelink feedback channel, PSFCH), hybrid automatic repeat request (hybrid automatic repeat request, HARQ) acknowledgement (acknowledgement, ACK) information, or the like." The HARQ ACK information may be positive acknowledgement (positive acknowledgement) information, negative acknowledgement (negative acknowledgement, NACK) information, or the like. This is not limited herein. Alternatively, it may be understood that the feedback for the data in this embodiment of this application may be carried on the PSFCH for transmission.

It should be noted that a "feedback reception occasion" in this embodiment of this application may also be understood as a "PSFCH reception occasion."

It should be noted that "no feedback for the data is received on a feedback reception occasion over a carrier" described in this embodiment of this application may also be described as "PSFCH reception does not exist on a PSFCH reception occasion over a carrier."

It should be noted that in this embodiment of this application, for data (for example, data 1 sent over a carrier 1) sent over a carrier (for example, the carrier 1), a feedback therefor may have the following three cases.

Case 1: The feedback (for example, a feedback 1 for the data 1) may be all transmitted over a carrier (namely, the carrier 1) over which the data is sent.

Case 2: The feedback (for example, a feedback 1 for the data 1) may be all transmitted over another carrier other than the carrier 1, for example, all transmitted over a carrier 2; for another example, all transmitted over a carrier 3.

Case 3: The feedback (for example, a feedback 1 for the data 1) may be transmitted over a plurality of carriers (two or more carriers). For example, a part of the feedback is transmitted over the carrier 1, and another part of the feedback is transmitted over another one or more carriers. For another example, a part of the feedback is transmitted over a carrier 2, and another part of the feedback is transmitted over a carrier 3 or another one or more carriers other than the carrier 1. This is specifically determined based on an actual scenario, and is not limited herein. For ease of description, in the following embodiment of this application, that the feedback for the data sent over one carrier may be all transmitted over the carrier over which the data is sent is used as an example for illustrative description. Alternatively, that the feedback for the data is all transmitted over another carrier is used as an example for illustrative description.

It should be noted that a feedback reception occasion over a carrier (for example, the carrier 1 is still used as an example) in this embodiment of this application may have the following three cases.

Case 1: The feedback reception occasion over the carrier 1 may include only a feedback reception occasion corresponding to data sent over the carrier 1.

Case 2: The feedback reception occasion over the carrier 1 may include only a feedback reception occasion corresponding to data sent over another carrier (namely, a carrier other than the carrier 1, for example, the carrier 2 or the carrier 3).

Case 3: The feedback reception occasion over the carrier 1 may include a feedback reception occasion corresponding to data sent over the carrier 1 and a feedback reception occasion corresponding to data sent over another carrier.

It should be noted that, in this embodiment of this application, a sidelink HARQ entity corresponding to the carrier may also be described as a sidelink HARQ entity corresponding to PSSCH/MAC PDU transmission, or may be described as a sidelink HARQ entity corresponding to the PSFCH reception occasion. This is not limited herein.

It should be noted that an RLC bearer described in this embodiment of this application may be replaced with a logical channel, or the RLC bearer described in this embodiment of this application may be replaced with an RLC entity.

It should be noted that in this embodiment of this application, the first terminal device may be understood as a source terminal device or a data sender, and the second terminal device may be described as a peer terminal device of the first terminal device, or may be understood as a destination terminal device or a data receiver.

It should be noted that initializing to 0 in this embodiment of this application may also be described as setting to 0, and re-initializing to 0 in this embodiment of this application may also be described as (re)setting to 0.

It should be noted that HARQ discontinuous transmission (discontinuous transmission, DTX) in this embodiment of this application may be understood as that a feedback for data is not received on a feedback reception occasion for the data.

It should be noted that, in this embodiment of this application, data sent over one carrier at different moments may be same data, or may be different data. This is not limited herein. Data sent over different carriers at a same moment may be same data, or may be different data. This is not limited herein. Data sent over different carriers at different moments may be same data, or may be different data. This is not limited herein. Data corresponding to feedback reception occasions at different moments over a carrier may be same data (for example, a same PSSCH or a same MAC PDU), or may be different data (for example, different PSSCHs or different MAC PDUs). Data corresponding to a feedback reception occasion at a same moment over different carriers may be same data (for example, a same PSSCH or a same MAC PDU), or may be different data (for example, different PSSCHs or different MAC PDUs). Data corresponding to feedback reception occasions at different moments over different carriers may be same data (for example, a same PSSCH or a same MAC PDU), or may be different data (for example, different PSSCHs or different MAC PDUs).

The following describes in detail communication methods and communication apparatuses provided in this application.

FIG. 2 is a schematic flowchart of a communication method according to an embodiment of this application. The method may be performed by a first terminal device, or may be performed by a chip in the first terminal device. For ease of description, in the following, the first terminal device and the chip in the first terminal device are collectively referred to as the first terminal device. The method shown in FIG. 2 may include the following operations.

S201: The first terminal device sends data to a second terminal device over a plurality of carriers through a sidelink SL.

In some implementations, the first terminal device may send the data to the second terminal device over the plurality of carriers through the sidelink (sidelink, SL). Specifically, the first terminal device may send the data to the second terminal device over the plurality of carriers through a PC5-RRC connection. Correspondingly, the second terminal device may receive the data from the first terminal device over the plurality of carriers. The data sent by the first terminal device over the plurality of carriers may be different data, or the data sent by the first terminal device over the plurality of carriers may be same data. This is not limited herein. For example, it is assumed that the plurality of carriers include a carrier 1, a carrier 2, a carrier 3, and a carrier 4. Data 1 may be sent over the carrier 1, data 2 may be sent over the carrier 2, data 3 may be sent over the carrier 3, and data 4 may be sent over the carrier 4. The data 1, the data 2, the data 3, and the data 4 are different. Alternatively, the carrier 1, the carrier 2, the carrier 3, and the carrier 4 may all be used to send data 1. It should be noted that the following embodiment of this application is mainly described by using an example in which the data 1 is sent over the carrier 1, the data 2 is sent over the carrier 2, the data 3 is sent over the carrier 3, and the data 4 is sent over the carrier 4. In other words, all data sent over the carrier 1 may be described as the data 1, all data sent over the carrier 2 may be described as the data 2, all data sent over the carrier 3 may be described as the data 3, and all data sent over the carrier 4 may be described as the data 4. The data 1 sent over the carrier 1 at different moments may be same data or may be different data. The data 2 sent over the carrier 2 at different moments may be same data or may be different data. The data 3 sent over the carrier 3 at different moments may be same data or may be different data. The data 4 sent over the carrier 4 at different moments may be same data or may be different data. This is not limited herein.

S202: The first terminal device determines feedback reception situations for the data on feedback reception occasions over the plurality of carriers, and determines, based on the feedback reception situations, whether an SL radio link failure RLF occurs between the first terminal device and the second terminal device.

In some implementations, the first terminal device may determine the feedback reception situation for the data on the feedback reception occasion over the plurality of carriers. Specifically, the first terminal device may determine, based on a MAC layer entity, the feedback reception situation for the data on the feedback reception occasion over the plurality of carriers. Further, the first terminal device (or described as a MAC layer entity of the first terminal device) may determine, based on the feedback reception situations, whether the SL RLF occurs between the first terminal device and the second terminal device. Herein, whether the SL RLF occurs between the first terminal device and the second terminal device may also be described as whether an SL RLF of the second terminal device occurs. It should be noted that, when it is determined that the SL RLF occurs between the first terminal device and the second terminal device, the MAC layer entity of the first terminal device may further indicate, to an upper layer (for example, an RRC layer of the first terminal device), that the SL RLF is detected.

It should be noted that, in an implementation ①, the determining feedback reception situations for the data on feedback reception occasions over the plurality of carriers may be understood as sequentially determining whether a feedback for the data is received on each feedback reception occasion over each of the plurality of carriers. To be specific, when transmission with one PC5-RRC connection is performed over the plurality of carriers, statistics on PSFCH reception occasions related to transmission of each PSSCH/MAC PDU over each carrier may be collected together, and a carrier over which the PSFCH reception occasion is included is not distinguished. A statistical manner may be that processing is performed in a sequence of the PSFCH reception occasions over the plurality of carriers in time domain. Optionally, processing on each feedback reception occasion over the plurality of carriers may not be limited to being performed in the sequence in time domain. This is specifically determined based on an actual application scenario, and is not limited herein. For ease of understanding, the following mainly uses an example in which the processing is performed in the sequence in time domain for illustrative description.

Further, the first terminal device may determine, based on the feedback reception situations, whether the SL RLF occurs between the first terminal device and the second terminal device. Herein, the determining, based on the feedback reception situations, whether the SL RLF occurs between the first terminal device and the second terminal device may be understood as maintaining a first quantity (or the first quantity may also be understood as a counter) for one PC5-RRC connection, and initializing the first quantity to 0. Once the PC5-RRC connection is established or a first threshold is (re)configured, the first quantity is (re)initialized to 0. Further, for all feedback reception occasions over the plurality of carriers, the feedback reception occasions are processed in the sequence in time domain. When the first quantity of consecutive times that no feedback for the data is received over the plurality of carriers is less than the first threshold, and a feedback for the data is received on a next feedback reception occasion, the first quantity is set to 0. When the first quantity of consecutive times that no feedback for the data is received over the plurality of carriers is less than the first threshold, and no feedback for the data is received on a next feedback reception occasion, the first quantity is added by 1. By analogy, when the first quantity of consecutive times that no feedback for the data is received over the plurality of carriers is greater than or equal to the first threshold, it is determined that the SL RLF occurs between the first terminal device and the second terminal device. The first threshold may be configured by a network device (a base station), or may be pre-configured (pre-configuration). This is not limited herein.

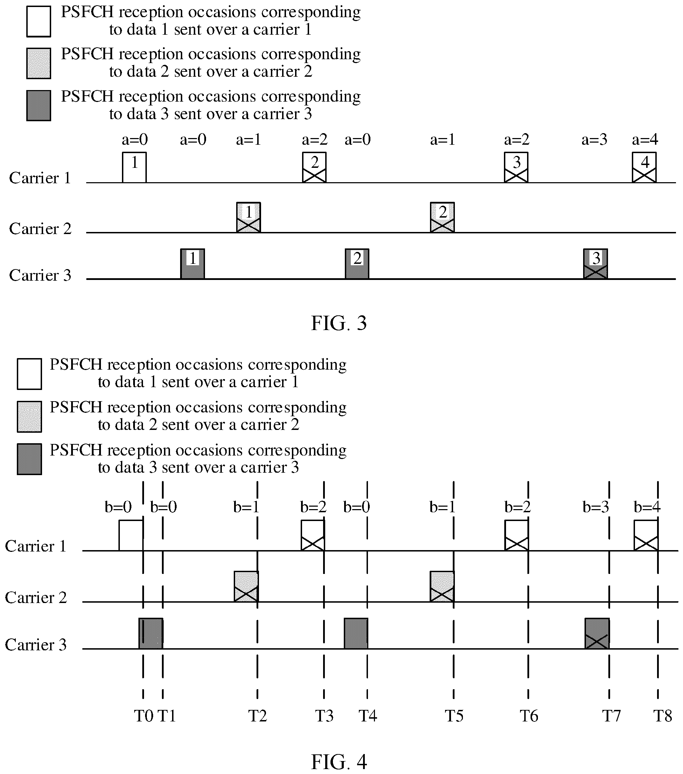

For example, FIG. 3 is a diagram of a scenario of determining an SL RLF according to an embodiment of this application. As shown in FIG. 3, transmission with one PC5-RRC connection is performed over a carrier 1, a carrier 2, and a carrier 3. Specifically, data 1 is sent over the carrier 1, data 2 is sent over the carrier 2, and data 3 is sent over the carrier 3. The data 1 sent over the carrier 1 at different moments may be same data or may be different data. The data 2 sent over the carrier 2 at different moments may be same data or may be different data. The data 3 sent over the carrier 3 at different moments may be same data or may be different data. This is not limited herein. In FIG. 3, an example in which a feedback for the data 1 is all transmitted over the carrier 1, a feedback for the data 2 is all transmitted over the carrier 2, and a feedback for the data 3 may be all transmitted over the carrier 3 is mainly used for illustrative description. It may be understood that a feedback situation may not be limited to the feedback situation shown in FIG. 3. This is specifically determined based on an actual scenario, and is not limited herein. For the PC5-RRC connection, a variable a (namely, a first quantity) is maintained, and the variable a is initialized to 0. Once the PC5-RRC connection is established or a first threshold is (re)configured, the variable a is (re)initialized to 0. It is assumed that the first threshold is 4.

Therefore, a process of collecting statistics on PSFCH reception occasions without distinguishing between carriers over which the PSFCH reception occasions are included is as follows:

If PSFCH reception exists on a PSFCH reception occasion 1 corresponding to the data 1, the variable a is initialized to 0;
if the PSFCH reception exists on a PSFCH reception occasion 1 corresponding to the data 3, the variable a is re-initialized to 0;
if the PSFCH reception does not exist on a PSFCH reception occasion 1 corresponding to the data 2, the variable a is added by 1, and the variable a is equal to 1;
if the PSFCH reception does not exist on a PSFCH reception occasion 2 corresponding to the data 1, the variable a is added by 1, and the variable a is equal to 2;
if the PSFCH reception exists on a PSFCH reception occasion 2 corresponding to the data 3, the variable a is re-initialized to 0;
if the PSFCH reception does not exist on a PSFCH reception occasion 2 corresponding to the data 2, the variable a is added by 1, and the variable a is equal to 1;
if the PSFCH reception does not exist on a PSFCH reception occasion 3 corresponding to the data 1, the variable a is added by 1, and the variable a is equal to 2;
if the PSFCH reception does not exist on a PSFCH reception occasion 3 corresponding to the data 3, the variable a is added by 1, and the variable a is equal to 3; and
if the PSFCH reception does not exist on a PSFCH reception occasion 4 corresponding to the data 1, the variable a is added by 1, and the variable a is equal to 4.

In this case, if the variable a (namely, the variable a=4) reaches the first threshold (namely, 4), it is considered that an SL RLF is detected between a first terminal device and a second terminal device.

It should be noted that, if a plurality of PSFCH reception occasions overlap in time domain, a PSFCH reception occasion that is first processed is not limited, or a specific rule may be specified. For example, a PSFCH reception occasion with earlier start time is first processed, or a PSFCH reception occasion with earlier end time is first processed. This is not limited herein. For ease of understanding, the following mainly uses an example in which the PSFCH reception occasion with earlier end time is first processed for illustrative description.

For example, FIG. 4 is a diagram of another scenario of determining an SL RLF according to an embodiment of this application. As shown in FIG. 4, a 1^{st} PSFCH reception occasion over a carrier 1 overlaps a 1^{st} PSFCH reception occasion over a carrier 3 in time domain. A processing rule of the two PSFCH reception occasions may be that processing is performed in a sequence of first processing a PSFCH reception occasion with earlier end time. As shown in FIG. 4, transmission with one PC5-RRC connection is performed over the carrier 1, a carrier 2, and the carrier 3. Specifically, data 1 is sent over the carrier 1, data 2 is sent over the carrier 2, and data 3 is sent over the carrier 3. The data 1 sent over the carrier 1 at different moments may be same data or may be different data, the data 2 sent over the carrier 2 at different moments may be same data or may be different data, and the data 3 sent over the carrier 3 at different moments may be same data or may be different data. This is not limited herein. A feedback for the data 1 is all transmitted over the carrier 1, and a feedback for the data 2 is all transmitted over the carrier 2. In FIG. 4, an example in which a feedback for the data 3 may be all transmitted over the carrier 3 is mainly used for illustrative description. It may be understood that a feedback situation may not be limited to the feedback situation shown in FIG. 4. This is specifically determined based on an actual scenario, and is not limited herein. For the PC5-RRC connection, a variable b (namely, a first quantity) is maintained, and the variable b is initialized to 0. Once the PC5-RRC connection is established or a first threshold is (re)configured, the variable b is (re)initialized to 0. It is assumed that the first threshold is 4.

Therefore, a statistical process of first processing the PSFCH reception occasion with earlier end time without distinguishing between carriers over which PSFCH reception occasions are included is as follows:

If PSFCH reception exists on a PSFCH reception occasion corresponding to a moment T0, the variable b is initialized to 0;
if the PSFCH reception exists on a PSFCH reception occasion corresponding to a moment T1, the variable b is re-initialized to 0;
if the PSFCH reception does not exist on a PSFCH reception occasion corresponding to a moment T2, the variable b is added by 1, and the variable b is equal to 1;
if the PSFCH reception does not exist on a PSFCH reception occasion corresponding to a moment T3, the variable b is added by 1, and the variable b is equal to 2;
if the PSFCH reception exists on a PSFCH reception occasion corresponding to a moment T4, the variable b is re-initialized to 0;
if the PSFCH reception does not exist on a PSFCH reception occasion corresponding to a moment T5, the variable b is added by 1, and the variable b is equal to 1;
if the PSFCH reception does not exist on a PSFCH reception occasion corresponding to a moment T6, the variable b is added by 1, and the variable b is equal to 2;
if the PSFCH reception does not exist on a PSFCH reception occasion corresponding to a moment T7, the variable b is added by 1, and the variable b is equal to 3; and
if the PSFCH reception does not exist on a PSFCH reception occasion corresponding to a moment T8, the variable b is added by 1, and the variable b is equal to 4.

In this case, if the variable b (namely, the variable b=4) reaches the first threshold, it is considered that an SL RLF is detected between a first terminal device and a second terminal device.

Usually, one carrier may correspond to one sidelink HARQ entity. For example, the carrier 1 corresponds to a sidelink HARQ entity 1, the carrier 2 corresponds to a sidelink HARQ entity 2, and the carrier 3 corresponds to a sidelink HARQ entity 3. In the implementation ①, a logical entity that performs addition or (re)initialization on a variable (namely, the first quantity) corresponding to the plurality of carriers may be any one of a plurality of sidelink HARQ entities corresponding to the plurality of carriers, for example, the sidelink HARQ entity 1, the sidelink HARQ entity 2, or the sidelink HARQ entity 3.

In another implementation (2), the determining feedback reception situations for the data on feedback reception occasions over the plurality of carriers may alternatively be understood as sequentially determining whether a feedback for the data is received on each feedback reception occasion over a first carrier, where the first carrier is any one of the plurality of carriers. A determining manner may be that processing is performed in a sequence of all PSFCH reception occasions over each carrier in time domain, or may not be performed in the sequence in time domain. This is not limited herein. For ease of understanding, the following mainly uses an example in which the processing is performed in the sequence in time domain for illustrative description.

Specifically, the following uses an example in which a feedback reception occasion over a carrier is Case 3 for description. To be specific, the sequentially determining whether a feedback for the data is received on each feedback reception occasion over a first carrier may be understood as sequentially determining whether the feedback for the data is received on all feedback reception occasions over the first carrier. All feedback reception occasions herein include a feedback reception occasion corresponding to first data sent over the first carrier, and a feedback reception occasion corresponding to data sent over another carrier.

Further, the first terminal device may determine, based on the feedback reception situations, whether the SL RLF occurs between the first terminal device and the second terminal device. Herein, the determining, based on the feedback reception situations, whether the SL RLF occurs between the first terminal device and the second terminal device may be understood as maintaining a second quantity (or the second quantity may also be understood as a counter) for each carrier in one PC5-RRC connection, and initializing the second quantity to 0. Once the PC5-RRC connection is established or the second threshold is (re)configured, or the first carrier is configured, or the first carrier is activated, the second quantity is (re)initialized to 0. Further, for all feedback reception occasions over the first carrier, the feedback reception occasions are processed in the sequence in time domain. When the second quantity of consecutive times that no feedback for the data is received over the first carrier is less than the second threshold, and a feedback for the data is received on a next feedback reception occasion, the second quantity is set to 0. When the second quantity of consecutive times that no feedback for the data is received over the first carrier is less than the second threshold, and no feedback for the data is received on a next feedback reception occasion, the second quantity is added by 1. By analogy, when the second quantity of consecutive times that no feedback for the data is received over the first carrier is greater than or equal to the second threshold, it is determined that the SL RLF occurs between the first terminal device and the second terminal device over the first carrier. Herein, that the SL RLF occurs between the first terminal device and the second terminal device over the first carrier may also be understood as that a quantity of consecutive HARQ DTXs of the second terminal device over the first carrier reaches a maximum quantity.

Optionally, in an implementation, when a quantity of consecutive HARQ DTXs over each of all carriers used by the first terminal device to send the data to the second terminal device reaches a maximum quantity, it is considered that the SL RLF occurs between the first terminal device and the second terminal device.

Optionally, in an implementation, when a quantity of consecutive HARQ DTXs over some carriers used by the first terminal device to send the data to the second terminal device does not reach a maximum quantity, it is considered that the SL RLF does not occur between the first terminal device and the second terminal device.

The second threshold may be configured by a network device (a base station), or may be pre-configured (pre-configuration). This is not limited herein. It should be noted that, in this embodiment of this application, the second threshold may be configured for each of different carriers. In another implementation, different carriers may alternatively use a same second threshold. It should be noted that a first threshold may be the same as the second threshold, or the first threshold may be different from the second threshold. This is not limited herein.

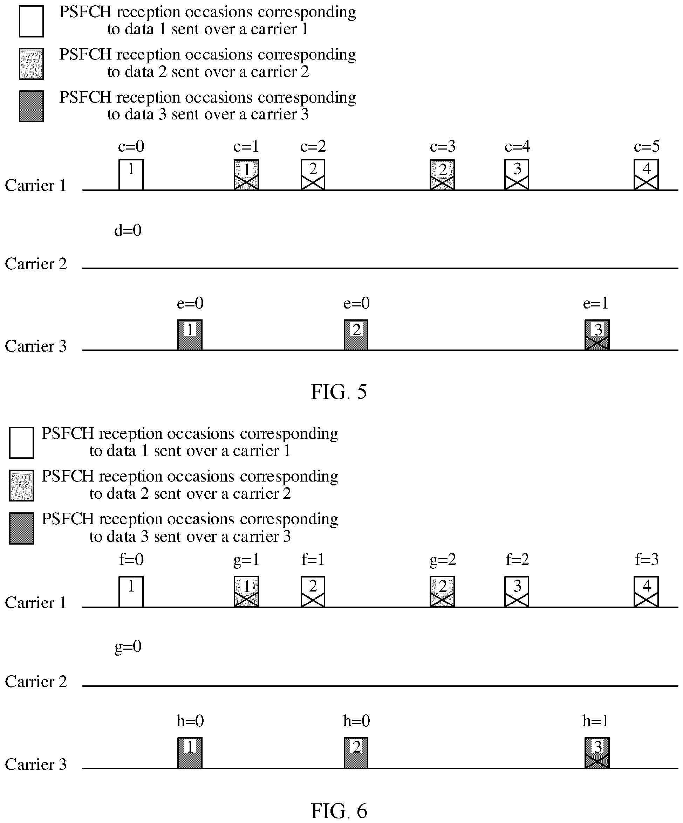

For example, FIG. 5 is a diagram of another scenario of determining an SL RLF according to an embodiment of this application. As shown in FIG. 5, data may be sent over a carrier 1, a carrier 2, and a carrier 3 with one PC5-RRC connection. Specifically, data 1 is sent over the carrier 1, data 2 is sent over the carrier 2, and data 3 is sent over the carrier 3. The data 1 sent over the carrier 1 at different moments may be same data or may be different data, the data 2 sent over the carrier 2 at different moments may be same data or may be different data, and the data 3 sent over the carrier 3 at different moments may be same data, or may be different data. This is not limited herein. In FIG. 5, an example in which a feedback for the data 1 is all transmitted over the carrier 1, a feedback for the data 2 may also be all transmitted over the carrier 1, and a feedback for the data 3 may be all transmitted over the carrier 3 is mainly used for illustrative description. It may be understood that a feedback situation may not be limited to the feedback situation shown in FIG. 5. This is specifically determined based on an actual scenario, and is not limited herein. Therefore, a variable may be maintained for each of the carrier 1, the carrier 2, and the carrier 3. To be specific, a variable c is maintained for the carrier 1, a variable d is maintained for the carrier 2, and a variable e is maintained for the carrier 3. The variable c, the variable d, and the variable e are initialized to 0. Herein, the variable c, the variable d, and the variable e each may be understood as a second quantity. It is assumed that a second threshold is 5. The details are as follows:
1. Over the carrier 1, the carrier 1 includes PSFCH reception occasions corresponding to the data 1 and the data 2. Therefore, a process of collecting statistics on all feedback reception occasions over the carrier 1 is as follows:

If PSFCH reception exists on a PSFCH reception occasion 1 corresponding to the data 1, the variable c is re-initialized to 0;
if the PSFCH reception does not exist on a PSFCH reception occasion 1 corresponding to the data 2, the variable c is added by 1, and the variable c is equal to 1;
if the PSFCH reception does not exist on a PSFCH reception occasion 2 corresponding to the data 1, the variable c is added by 1, and the variable c is equal to 2;
if the PSFCH reception does not exist on a PSFCH reception occasion 2 corresponding to the data 2, the variable c is added by 1, and the variable c is equal to 3;
if the PSFCH reception does not exist on a PSFCH reception occasion 3 corresponding to the data 1, the variable c is added by 1, and the variable c is equal to 4; and
if the PSFCH reception does not exist on a PSFCH reception occasion 4 corresponding to the data 1, the variable c is added by 1, and the variable c is equal to 5.

In this case, if the variable c (namely, the variable c=5) reaches the second threshold, it is determined that the SL RLF occurs over the carrier 1 between a first terminal device and a second terminal device.

2. Over the carrier 2, there is no PSFCH reception occasion for any data. Therefore, a statistical result of all feedback reception occasions over the carrier 2 is that the variable d is 0.

In this case, if the variable d (namely, the variable d=0) does not reach the second threshold, it is determined that the SL RLF does not occur over the carrier 2 between the first terminal device and the second terminal device.

3. Over the carrier 3, the carrier 3 only includes PSFCH reception occasions corresponding to the data 3. Therefore, a process of collecting statistics on all feedback reception occasions over the carrier 3 is as follows:

If PSFCH reception exists on a PSFCH reception occasion 1 corresponding to the data 3, the variable e is re-initialized to 0;
if the PSFCH reception exists on a PSFCH reception occasion 2 corresponding to the data 3, the variable e is re-initialized to 0; and
if the PSFCH reception does not exist on a PSFCH reception occasion 3 corresponding to the data 3, the variable e is added by 1, and the variable e is equal to 1.

In this case, if the variable e (namely, the variable e=1) does not reach the second threshold, it is determined that the SL RLF does not occur over the carrier 3 between the first terminal device and the second terminal device. That the SL RLF does not occur over the carrier 3 between the first terminal device and the second terminal device may also be understood as that a quantity of consecutive HARQ DTXs of the second terminal device over the carrier 3 does not reach a maximum quantity.

It should be noted that, if there is no feedback reception occasion over a carrier, statistics on the carrier may not be collected. In other words, in the foregoing example, the variable d does not need to be maintained for the carrier 2.

Usually, one carrier may correspond to one sidelink HARQ entity. For example, the carrier 1 corresponds to a sidelink HARQ entity 1, the carrier 2 corresponds to a sidelink HARQ entity 2, and the carrier 3 corresponds to a sidelink HARQ entity 3. In the implementation (2), a logical entity that performs addition or (re)initialization on a variable corresponding to a carrier may be a sidelink HARQ entity corresponding to the carrier. The logical entity that performs addition or (re)initialization on a variable corresponding to a carrier may include a sidelink HARQ entity corresponding to data (the data may be data sent over another carrier) related to a feedback reception occasion over the carrier. In other words, a logical entity that collects statistics on a feedback reception situation over a carrier may be a sidelink HARQ entity corresponding to the carrier. For example, a logical entity that collects statistics on a feedback reception situation over the carrier 1 may be the sidelink HARQ entity 1, a logical entity that collects statistics on a feedback reception situation over the carrier 2 may be the sidelink HARQ entity 2, and a logical entity that collects statistics on a feedback reception situation over the carrier 3 may be the sidelink HARQ entity 3. A sidelink HARQ entity corresponding to a carrier may be understood as a sidelink HARQ entity corresponding to data sent over the carrier. Alternatively, a sidelink HARQ entity corresponding to a carrier may be understood as a sidelink HARQ entity corresponding to a feedback reception occasion over the carrier.

The logical entity that performs addition or (re)initialization on a variable corresponding to a carrier may further include a sidelink HARQ entity corresponding to data (the data may be data sent over another carrier) related to a feedback reception occasion over the carrier. For example, a logical entity that collects statistics on the feedback reception situation over the carrier 1 may be the sidelink HARQ entity 1 and a sidelink HARQ entity corresponding to data sent over the carrier 2.

In another implementation (3), the determining feedback reception situations for the data on feedback reception occasions over the plurality of carriers may alternatively be understood as sequentially determining whether a feedback for first data sent over a first carrier is received on each feedback reception occasion for the first data, where the first carrier is any one of the plurality of carriers. The first data herein is data sent over the first carrier. A determining manner may be that processing is performed in a sequence of PSFCH reception occasions for a PSSCH/MAC PDU sent over each carrier in time domain, or may not be performed in the sequence in time domain. This is not limited herein. For ease of understanding, the following mainly uses an example in which the processing is performed in the sequence in time domain for illustrative description.

It should be noted that each feedback reception occasion for the first data sent over the first carrier may be over one or more carriers, and the one or more carriers include the first carrier, or may not include the first carrier. This is not limited herein. Alternatively, each feedback reception occasion for the first data sent over the first carrier may include only a feedback reception occasion over the first carrier. The following uses an example in which each feedback reception occasion for the first data sent over the first carrier may be over one or more carriers for description.

Further, the first terminal device may determine, based on the feedback reception situations, whether the SL RLF occurs between the first terminal device and the second terminal device. Herein, the determining, based on the feedback reception situations, whether the SL RLF occurs between the first terminal device and the second terminal device may be understood as maintaining a third quantity (or the third quantity may also be understood as a counter) for each carrier in one PC5-RRC connection, and initializing the third quantity to 0. Once the PC5-RRC connection is established or a third threshold is (re)configured, or the first carrier is configured, or the first carrier is activated, the third quantity is (re)initialized to 0. Further, for all feedback reception occasions for the first data sent over the first carrier, the feedback reception occasions for the first data are processed in the sequence in time domain. When the third quantity of consecutive times that no feedback for the first data is received over the first carrier is less than the third threshold, and a feedback for the first data is received on a next feedback reception occasion for the first data, the third quantity is set to 0. When the third quantity of consecutive times that no feedback for the first data is received over the first carrier is less than the third threshold, and no feedback for the first data is received on a next feedback reception occasion for the first data, the third quantity is added by 1. By analogy, when the third quantity of consecutive times that no feedback for the first data is received is greater than or equal to the third threshold, it is determined that the SL RLF occurs between the first terminal device and the second terminal device over the first carrier. Herein, that the SL RLF occurs between the first terminal device and the second terminal device over the first carrier may also be understood as that a quantity of consecutive HARQ DTXs of the second terminal device over the first carrier reaches a maximum quantity.

Optionally, in an implementation, when a quantity of consecutive HARQ DTXs over each of all carriers used by the first terminal device to send the data to the second terminal device reaches a maximum quantity, it is considered that the SL RLF occurs between the first terminal device and the second terminal device.

Optionally, in an implementation, when a quantity of consecutive HARQ DTXs over some carriers used by the first terminal device to send the data to the second terminal device does not reach a maximum quantity, it is considered that the SL RLF does not occur between the first terminal device and the second terminal device.

The third threshold may be configured by a network device (a base station), or may be pre-configured (pre-configuration). This is not limited herein. It should be noted that, in this embodiment of this application, the third threshold may be configured for each of different carriers. In another implementation, different carriers may alternatively use a same third threshold. It should be noted that a first threshold, a second threshold, and the third threshold may be different form each other; or the first threshold, the second threshold, and the third threshold may be partially the same, for example, the first threshold and the second threshold may be the same, and the third threshold and the first threshold (or the second threshold) may be different; or the first threshold, the second threshold, and the third threshold may be all the same. This is not limited herein.

For example, FIG. 6 is a diagram of another scenario of determining an SL RLF according to an embodiment of this application. As shown in FIG. 6, data may be sent over a carrier 1, a carrier 2, and a carrier 3 with one PC5-RRC connection. Specifically, data 1 is sent over the carrier 1, data 2 is sent over the carrier 2, and data 3 is sent over the carrier 3. The data 1 sent over the carrier 1 at different moments may be same data or may be different data, the data 2 sent over the carrier 2 at different moments may be same data or may be different data, and the data 3 sent over the carrier 3 at different moments may be same data or may be different data. This is not limited herein. In FIG. 6, an example in which a feedback for the data 1 is all transmitted over the carrier 1, a feedback for the data 2 may also be all transmitted over the carrier 1, and a feedback for the data 3 is all transmitted over the carrier 3 is mainly used for illustrative description. It may be understood that a feedback situation may not be limited to the feedback situation shown in FIG. 6. This is specifically determined based on an actual scenario, and is not limited herein. Therefore, a variable may be maintained for each of the carrier 1, the carrier 2, and the carrier 3. To be specific, a variable f is maintained for the carrier 1, a variable g is maintained for the carrier 2, and a variable h is maintained for the carrier 3. The variable f, the variable g, and the variable h are initialized to 0. Herein, the variable f, the variable g, and the variable h each may be understood as a third quantity. It is assumed that a third threshold is 3. The details are as follows:
1. A process of collecting statistics on PSFCH reception occasions corresponding to the data 1 sent over the carrier 1 is as follows:
   Over the carrier 1, if PSFCH reception exists on a PSFCH reception occasion 1 corresponding to the data 1, the variable f is 0;
   if the PSFCH reception does not exist on a PSFCH reception occasion 2 corresponding to the data 1, the variable f is added by 1, and the variable f is equal to 1;
   if the PSFCH reception does not exist on a PSFCH reception occasion 3 corresponding to the data 1, the variable f is added by 1, and the variable f is equal to 2; and
   if the PSFCH reception does not exist on a PSFCH reception occasion 4 corresponding to the data 1, the variable f is added by 1, and the variable f is equal to 3.
   In this case, if the variable f (namely, the variable f=3) reaches the third threshold, it is determined that the SL RLF occurs over the carrier 1 between a first terminal device and a second terminal device.
2. A process of collecting statistics on PSFCH reception occasions corresponding to the data 2 sent over the carrier 2 is as follows:
   Over the carrier 2, if PSFCH reception does not exist on a PSFCH reception occasion 1 corresponding to the data 2, the variable g is added by 1, and the variable g is equal to 1; and
   if the PSFCH reception does not exist on a PSFCH reception occasion 2 corresponding to the data 2, the variable g is added by 1, and the variable g is equal to 2.
   In this case, if the variable g (namely, the variable g=2) does not reach the third threshold, it is determined that the SL RLF does not occur over the carrier 2 between the first terminal device and the second terminal device. That the SL RLF does not occur over the carrier 2 between the first terminal device and the second terminal device may also be understood as that a quantity of consecutive HARQ DTXs of the second terminal device over the carrier 2 does not reach a maximum quantity.
3. A process of collecting statistics on PSFCH reception occasions corresponding to the data 3 sent over the carrier 3 is as follows:
   Over the carrier 3, if PSFCH reception exists on a PSFCH reception occasion 1 corresponding to the data 3, the variable h is re-initialized to 0;
   if the PSFCH reception exists on a PSFCH reception occasion 2 corresponding to the data 3, the variable h is re-initialized to 0; and
   if the PSFCH reception does not exist on a PSFCH reception occasion 3 corresponding to the data 3, the variable h is added by 1, and the variable h is equal to 1.

In this case, if the variable h (namely, the variable h=1) does not reach the third threshold, it is determined that the SL RLF does not occur over the carrier 3 between the first terminal device and the second terminal device. That the SL RLF does not occur over the carrier 3 between the first terminal device and the second terminal device may also be understood as that a quantity of consecutive HARQ DTXs of the second terminal device over the carrier 3 does not reach a maximum quantity.

Usually, one carrier may correspond to one sidelink HARQ entity. For example, the carrier 1 corresponds to a sidelink HARQ entity 1, the carrier 2 corresponds to a sidelink HARQ entity 2, and the carrier 3 corresponds to a sidelink HARQ entity 3. In the implementation (3), a logical entity that performs addition or (re)initialization on a variable corresponding to a carrier may be a sidelink HARQ entity corresponding to the carrier. In other words, a logical entity that collects statistics on a feedback reception situation over a carrier may be a sidelink HARQ entity corresponding to the carrier. For example, a logical entity that collects statistics on a feedback reception situation over the carrier 1 may be the sidelink HARQ entity 1, a logical entity that collects statistics on a feedback reception situation over the carrier 2 may be the sidelink HARQ entity 2, and a logical entity that collects statistics on a feedback reception situation over the carrier 3 may be the sidelink HARQ entity 3. A sidelink HARQ entity corresponding to a carrier may be understood as a sidelink HARQ entity corresponding to data sent over the carrier. Alternatively, a sidelink HARQ entity corresponding to a carrier may be understood as a sidelink HARQ entity corresponding to a feedback reception occasion over the carrier.

In another implementation (4), the plurality of carriers used for data sending may be grouped for statistics collection, in other words, the plurality of carriers used for data sending may be divided into a plurality of carrier groups, so that statistics are collected for each carrier group. Different carrier groups may include different carriers. A first carrier group may be any one of the plurality of carrier groups. For example, it is assumed that the plurality of carriers include a carrier 1, a carrier 2, a carrier 3, and a carrier 4, where the carrier 1 and the carrier 2 may form a carrier group 1, and the carrier 3 and the carrier 4 may form a carrier group 2.

Specifically, in the foregoing implementation (4), there may be the following two statistical manners.

In a first statistical manner, statistics on feedback reception situations on all feedback reception occasions over the first carrier group are collected. In other words, the determining feedback reception situations for the data on feedback reception occasions over the plurality of carriers may alternatively be understood as sequentially determining whether a feedback for the data is received on each feedback reception occasion over each carrier in the first carrier group. The first carrier group may include two or more carriers, and the two or more carriers in the first carrier group are included in the plurality of carriers. The sequentially determining whether a feedback for the data is received on each feedback reception occasion over the first carrier group may be understood as sequentially determining whether the feedback for the data is received on all feedback reception occasions over the first carrier group. All feedback reception occasions herein include a feedback reception occasion corresponding to data sent over the first carrier group, and a feedback reception occasion corresponding to data sent over another carrier group.

Further, the first terminal device may determine, based on the feedback reception situations, whether the SL RLF occurs between the first terminal device and the second terminal device. Herein, the determining, based on the feedback reception situations, whether the SL RLF occurs between the first terminal device and the second terminal device may be understood as maintaining a fourth quantity for each of different carrier groups in one PC5-RRC connection, and initializing the fourth quantity to 0. Once the PC5-RRC connection is established, or a fourth threshold is (re)configured, or a fourth carrier group is (re)configured, or the fourth carrier group is activated, or any carrier in the fourth carrier group is (re)configured, or any carrier in the fourth carrier group is (re)activated, the fourth quantity is (re)initialized to 0. For all feedback reception occasions over the first carrier group, the feedback reception occasions are processed in a sequence in time domain. When the fourth quantity of consecutive times that no feedback for the data is received over the first carrier group is less than the fourth threshold, and a feedback for the data is received on a next feedback reception occasion, the fourth quantity is set to 0. When the fourth quantity of consecutive times that no feedback for the data is received over the first carrier group is less than the fourth threshold, and no feedback for the data is received on a next feedback reception occasion, the fourth quantity is added by 1. By analogy, when the fourth quantity of consecutive times that no feedback for the data is received over the first carrier group is greater than or equal to the fourth threshold, it is determined that the SL RLF occurs over the first carrier group between the first terminal device and the second terminal device.

Herein, that the SL RLF occurs over the first carrier group between the first terminal device and the second terminal device may also be understood as that a quantity of consecutive HARQ DTXs of the second terminal device over the first carrier group reaches a maximum quantity.

In an implementation, when a quantity of consecutive HARQ DTXs over each of all carrier groups used by the first terminal device to send the data to the second terminal device reaches a maximum quantity, it is considered that the SL RLF occurs between the first terminal device and the second terminal device.

In an implementation, when a quantity of consecutive HARQ DTXs over some carrier groups used by the first terminal device to send the data to the second terminal device does not reach a maximum quantity, it is considered that the SL RLF does not occur between the first terminal device and the second terminal device.

The fourth threshold may be configured by a network device (a base station), or may be pre-configured (pre-configuration). This is not limited herein. It should be noted that, in this embodiment of this application, the fourth threshold may be configured for each of different carrier groups. In another implementation, different carrier groups may alternatively use a same fourth threshold. It should be noted that a first threshold, a second threshold, a third threshold, and the fourth threshold may be different from each other; or the first threshold, the second threshold, the third threshold, and the fourth threshold may be partially the same, for example, the first threshold and the second threshold may be the same, and the third threshold, the fourth threshold, and the first threshold (or the second threshold) are different; or the first threshold, the second threshold, the third threshold, and the fourth threshold may be all the same. This is not limited herein.

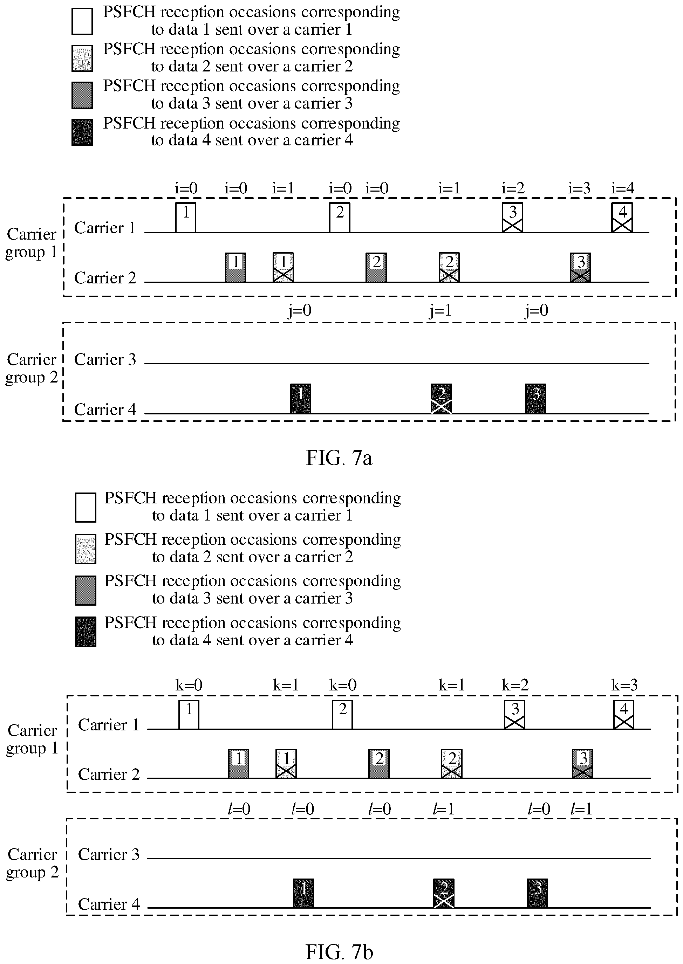

For example, FIG. 7a is a diagram of another scenario of determining an SL RLF according to an embodiment of this application. As shown in FIG. 7a, data may be sent over a carrier 1, a carrier 2, a carrier 3, and a carrier 4 with one PC5-RRC connection. Specifically, data 1 is sent over the carrier 1, data 2 is sent over the carrier 2, data 3 is sent over the carrier 3, and data 4 is sent over the carrier 4. The data 1 sent over the carrier 1 at different moments may be same data or may be different data, the data 2 sent over the carrier 2 at different moments may be same data or may be different data, the data 3 sent over the carrier 3 at different moments may be same data, or may be different data, and the data 4 sent over the carrier 4 at different moments may be same data or may be different data. This is not limited herein. In FIG. 7a, an example in which a feedback for the data 1 is all transmitted over the carrier 1, a feedback for the data 2 is all transmitted over the carrier 2, a feedback for the data 3 is all transmitted over the carrier 2, and a feedback for the data 4 is all transmitted over the carrier 4 is mainly used for illustrative description. It may be understood that a feedback situation may not be limited to the feedback situation shown in FIG. 7a. This is specifically determined based on an actual scenario, and is not limited herein. A variable i may be maintained for a carrier group 1 formed by the carrier 1 and the carrier 2, and a variable j may be maintained for a carrier group 2 formed by the carrier 3 and the carrier 4. The variable i and the variable j are initialized to 0. The variable i and the variable j herein may be understood as a fourth quantity. To be specific, the carrier 1 and the carrier 2 may be grouped into the carrier group 1, and the carrier 3 and the carrier 4 may be grouped into the carrier group 2, to collect statistics on feedback situations. It is assumed that a fourth threshold is 4. The details are as follows:

1. Over the carrier group 1, the carrier 1 in the carrier group 1 includes PSFCH reception occasions corresponding to the data 1, and the carrier 2 in the carrier group 1 includes PSFCH reception occasions corresponding to the data 2 and the data 3. Therefore, a process of collecting statistics on all feedback reception occasions over the carrier group 1 is as follows:

If PSFCH reception exists on a PSFCH reception occasion 1 corresponding to the data 1, the variable i is initialized to 0;
if the PSFCH reception exists on a PSFCH reception occasion 1 corresponding to the data 3, the variable i is re-initialized to 0;
if the PSFCH reception does not exist on a PSFCH reception occasion 1 corresponding to the data 2, the variable i is added by 1, and the variable i is equal to 1;
if the PSFCH reception exists on a PSFCH reception occasion 2 corresponding to the data 1, the variable i is re-initialized to 0;
if the PSFCH reception exists on a PSFCH reception occasion 2 corresponding to the data 3, the variable i is re-initialized to 0;
if the PSFCH reception does not exist on a PSFCH reception occasion 2 corresponding to the data 2, the variable i is added by 1, and the variable i is equal to 1;
if the PSFCH reception does not exist on a PSFCH reception occasion 3 corresponding to the data 1, the variable i is added by 1, and the variable i is equal to 2;
if the PSFCH reception does not exist on a PSFCH reception occasion 3 corresponding to the data 3, the variable i is added by 1, and the variable i is equal to 3; and
if the PSFCH reception does not exist on a PSFCH reception occasion 4 corresponding to the data 1, the variable i is added by 1, and the variable i is equal to 4;

In this case, if the variable i (namely, the variable i=4) reaches the fourth threshold, it is determined that the SL RLF occurs over the carrier group 1 between a first terminal device and a second terminal device.

2. Over the carrier group 2, the carrier 3 in the carrier group 2 does not include a PSFCH reception occasion corresponding to any data, and the carrier 4 in the carrier group 2 includes PSFCH reception occasions corresponding to the data 4. Therefore, a process of collecting statistics on all feedback reception occasions over the carrier group 2 is as follows:

If the PSFCH reception exists on a PSFCH reception occasion 1 corresponding to the data 4, the variable j is initialized to 0;
if the PSFCH reception does not exist on a PSFCH reception occasion 2 corresponding to the data 4, the variable j is added by 1, and the variable j is equal to 1; and

If the PSFCH reception exists on a PSFCH reception occasion 3 corresponding to the data 4, the variable j is re-initialized to 0.

In this case, if the variable j (namely, the variable j=0) does not reach the fourth threshold, it is determined that the SL RLF does not occur over the carrier group 2 between the first terminal device and the second terminal device. That the SL RLF does not occur over the carrier group 2 between the first terminal device and the second terminal device may also be understood as that a quantity of consecutive HARQ DTXs of the second terminal device over the carrier group 2 does not reach a maximum quantity.

In a second statistical manner, statistics on feedback reception situations on feedback reception occasions corresponding to first carrier group data sent over the first carrier group are collected. In other words, the determining feedback reception situations for the data on feedback reception occasions over the plurality of carriers may alternatively be understood as sequentially determining whether a feedback for the first carrier group data is received on each feedback reception occasion for the first carrier group data sent over the first carrier group, where the first carrier group is any one of the plurality of carrier groups. Herein, the first carrier group data is data sent over the first carrier group. In other words, all data sent over the first carrier group is described as the first carrier group data. Further, the first terminal device may determine, based on the feedback reception situations, whether the SL RLF occurs between the first terminal device and the second terminal device. Herein, the determining, based on the feedback reception situations, whether the SL RLF occurs between the first terminal device and the second terminal device may be understood as maintaining a fifth quantity (or the fifth quantity may also be understood as a counter) for each carrier group in one PC5-RRC connection, and initializing the fifth quantity to 0. Once the PC5-RRC connection is established or a fifth threshold is (re)configured, the fifth quantity is (re)initialized to 0.

Further, for all feedback reception occasions for the first carrier group data sent over the first carrier group, the feedback reception occasions for the first carrier group data are processed in a sequence in time domain. When the fifth quantity of consecutive times that no feedback for the first carrier group data is received over the first carrier group is less than the fifth threshold, and a feedback for the first carrier group data is received on a next feedback reception occasion for the first carrier group data, the fifth quantity is set to 0. When the fifth quantity of consecutive times that no feedback for the first carrier group data is received over the first carrier group is less than the fifth threshold, and no feedback for the first carrier group data is received on a next feedback reception occasion for the first carrier group data, the fifth quantity is added by 1. By analogy, when the fifth quantity of consecutive times that no feedback for the first carrier group data is received over the first carrier group is greater than or equal to the fifth threshold, it is determined that the SL RLF occurs over the first carrier group between the first terminal device and the second terminal device.

Herein, that the SL RLF occurs over the first carrier group between the first terminal device and the second terminal device may also be understood as that a quantity of consecutive HARQ DTXs of the second terminal device over the first carrier group reaches a maximum quantity.

In an implementation, when a quantity of consecutive HARQ DTXs over each of all carrier groups used by the first terminal device to send the data to the second terminal device reaches a maximum quantity, it is considered that the SL RLF occurs between the first terminal device and the second terminal device.

In an implementation, when a quantity of consecutive HARQ DTXs over some carrier groups used by the first terminal device to send the data to the second terminal device does not reach a maximum quantity, it is considered that the SL RLF does not occur between the first terminal device and the second terminal device.

The fifth threshold may be configured by a network device (a base station), or may be pre-configured (pre-configuration). This is not limited herein. It should be noted that, in this embodiment of this application, the fifth threshold may be configured for each of different carrier groups. It should be noted that a first threshold, a second threshold, a third threshold, a fourth threshold, and the fifth threshold may be different from each other; or the first threshold, the second threshold, the third threshold, the fourth threshold, and the fifth threshold may be partially the same or all the same, or the like. This is not limited herein.

For example, FIG. 7b is a diagram of another scenario of determining an SL RLF according to an embodiment of this application. As shown in FIG. 7b, data may be sent over a carrier 1, a carrier 2, a carrier 3, and a carrier 4 with one PC5-RRC connection. Specifically, data 1 is sent over the carrier 1, data 2 is sent over the carrier 2, data 3 is sent over the carrier 3, and data 4 is sent over the carrier 4. The data 1 sent over the carrier 1 at different moments may be same data or may be different data, the data 2 sent over the carrier 2 at different moments may be same data or may be different data, the data 3 sent over the carrier 3 at different moments may be same data, or may be different data, and the data 4 sent over the carrier 4 at different moments may be same data or may be different data. This is not limited herein. In FIG. 7b, an example in which a feedback for the data 1 is all transmitted over the carrier 1, a feedback for the data 2 is all transmitted over the carrier 2, a feedback for the data 3 is all transmitted over the carrier 2, and a feedback for the data 4 is all transmitted over the carrier 4 is mainly used for illustrative description. It may be understood that a feedback situation may not be limited to the feedback situation shown in FIG. 7b. This is specifically determined based on an actual scenario, and is not limited herein. A variable k may be maintained for a carrier group 1 formed by the carrier 1 and the carrier 2, and a variable *l* may be maintained for a carrier group 2 formed by the carrier 3 and the carrier 4. The variable k and the variable *l* are initialized to 0. The variable k and the variable *l* may be understood as a fifth quantity. To be specific, the carrier 1 and the carrier 2 may be grouped into the carrier group 1, and the carrier 3 and the carrier 4 may be grouped into the carrier group 2, to collect statistics on feedback situations. It is assumed that a fifth threshold is 3. The details are as follows:
1. A process of collecting statistics on feedback reception occasions corresponding to the data sent over the carrier group 1 is as follows:
   If PSFCH reception exists on a PSFCH reception occasion 1 corresponding to the data 1, the variable k is initialized to 0;
   if the PSFCH reception does not exist on a PSFCH reception occasion 1 corresponding to the data 2, the variable k is added by 1, and the variable k is equal to 1;
   if the PSFCH reception exists on a PSFCH reception occasion 2 corresponding to the data 1, the variable k is re-initialized to 0;
   if the PSFCH reception does not exist on a PSFCH reception occasion 3 corresponding to the data 2, the variable k is added by 1, and the variable k is equal to 1;
   if the PSFCH reception does not exist on a PSFCH reception occasion 3 corresponding to the data 1, the variable k is added by 1, and the variable k is equal to 2; and
   if the PSFCH reception does not exist on a PSFCH reception occasion 4 corresponding to the data 1, the variable k is added by 1, and the variable k is equal to 3.
   In this case, if the variable k (namely, the variable k=3) reaches the fifth threshold, it is determined that the SL RLF occurs over the carrier group 1 between a first terminal device and a second terminal device.
2. A process of collecting statistics on feedback reception occasions corresponding to the data sent over the carrier group 2 is as follows:
   If PSFCH reception exists on a PSFCH reception occasion 1 corresponding to the data 3, the variable *l* is initialized to 0;
   if the PSFCH reception exists on a PSFCH reception occasion 1 corresponding to the data 4, the variable *l* is re-initialized to 0;
   if the PSFCH reception exists on a PSFCH reception occasion 2 corresponding to the data 3, the variable *l* is re-initialized to 0;
   if the PSFCH reception does not exist on a PSFCH reception occasion 2 corresponding to the data 4, the variable *l* is added by 1, and the variable *l* is equal to 1;
   if the PSFCH reception exists on a PSFCH reception occasion 3 corresponding to the data 4, the variable *l* is re-initialized to 0; and
   if the PSFCH reception does not exist on a PSFCH reception occasion 3 corresponding to the data 3, the variable *l* is added by 1, and the variable *l* is equal to 1.

In this case, if the variable *l* (namely, the variable *l*=1) does not reach the fifth threshold, it is determined that the SL RLF does not occur over the carrier group 2 between the first terminal device and the second terminal device. Herein, that the SL RLF does not occur over the carrier group 2 between the first terminal device and the second terminal device may also be understood as that a quantity of consecutive HARQ DTXs of the second terminal device over the carrier group 2 does not reach a maximum quantity.

Usually, one carrier may correspond to one sidelink HARQ entity. For example, the carrier 1 corresponds to a sidelink HARQ entity 1, the carrier 2 corresponds to a sidelink HARQ entity 2, the carrier 3 corresponds to a sidelink HARQ entity 3, and the carrier 4 corresponds to a sidelink HARQ entity 4. In the implementation (4), a logical entity that performs addition or (re)initialization on the variable k for a carrier group should be a sidelink HARQ entity corresponding to any carrier in the carrier group. For example, it is assumed that the carrier 1 and the carrier 2 form the carrier group 1, and the carrier 3 and the carrier 4 form the carrier group 2. In this case, a logical entity that collects statistics on feedback reception situations over the carrier group 1 may be the sidelink HARQ entity 1 or the sidelink HARQ entity 2; and a logical entity that collects statistics on feedback reception situations over the carrier group 2 may be the sidelink HARQ entity 3 or the sidelink HARQ entity 4.

Optionally, in some implementations, when the first terminal device cannot determine a specific carrier over which the SL RLF occurs, but can only determine that the SL RLF occurs on the PC5-RRC connection, the first terminal device releases the PC5-RRC connection. Herein, releasing the PC5-RRC connection may be understood as releasing a data radio bearer (data radio bearer, DRB) and a signaling radio bearer (signaling radio bearer, SRB) of the second terminal device, discarding an NR sidelink communication related configuration of the second terminal device, resetting a sidelink-specific MAC of the second terminal device, and indicating, to an upper layer, that the PC5-RRC connection of the second terminal device is released (in other words, PC5 is unavailable). In other words, when the first terminal device cannot determine a specific carrier over which the quantity of consecutive HARQ DTXs reaches the maximum quantity, and cannot determine a specific carrier over which a quantity of RLC entity retransmissions reaches a maximum quantity, the first terminal device can only determine that the SL RLF occurs on the PC5-RRC connection, and the first terminal device releases the PC5-RRC connection, releases the data radio bearer and the signaling radio bearer of the second terminal device, discards the NR sidelink communication related configuration of the second terminal device, resets the sidelink-specific MAC of the second terminal device, and indicates, to the upper layer, that the PC5-RRC connection of the second terminal device is released (in other words, PC5 is unavailable).

Optionally, in some implementations, when the first terminal device may determine a first carrier over which the SL RLF occurs, the first terminal device may delete or release the first carrier. That the first terminal device deletes and/or releases the first carrier may be understood as at least one of the following: The first terminal device deletes the first carrier from carriers used by the first terminal device to send data to the second terminal device; the first terminal device deletes the first carrier from carriers used by the first terminal device to receive data sent by the second terminal device; the first terminal device clears an SL grant (grant) that has been allocated to the second terminal device over the first carrier; and the first terminal device refreshes a HARQ buffer associated with the first carrier of the second terminal device.

In this implementation of this application, that the first terminal device may determine the first carrier over which the SL RLF occurs may also be understood as that the first terminal device may determine the first carrier over which the quantity of consecutive HARQ DTXs reaches the maximum quantity, or the first terminal device may determine the first carrier over which the quantity of RLC entity retransmissions reaches the maximum quantity.

Optionally, in an implementation, when the SL RLF occurs over each of all carriers used by the first terminal device to send data to the second terminal device, it is considered that the SL RLF occurs between the first terminal device and the second terminal device.

Optionally, in an implementation, when the SL RLF does not occur over some carriers used by the first terminal device to send data to the second terminal device, it is considered that the SL RLF does not occur between the first terminal device and the second terminal device.

Optionally, in some implementations, when the first terminal device determines the first carrier over which the SL RLF occurs, the first terminal device may further send first indication information to the second terminal device. Correspondingly, the second terminal device receives the first indication information from the first terminal device. The first indication information indicates that the SL RLF occurs over the first carrier, or the first indication information indicates to delete or release the first carrier. In other words, the second terminal device may delete or release the first carrier based on the first indication information. That the second terminal device deletes or releases the first carrier may be understood as that the second terminal device deletes the first carrier from carriers used by the second terminal device to receive data from the first terminal device, and/or the second terminal device deletes the first carrier from carriers used by the second terminal device to send a feedback to the first terminal device, and/or the second terminal device clears an SL grant (grant) that has been allocated to the first terminal device over the first carrier, and/or the second terminal device refreshes a HARQ buffer associated with the first carrier of the first terminal device.

Optionally, in some implementations, if the first terminal device is in RRC connected mode, to be specific, if there is an RRC connection between the first terminal device and an access network device (for example, a base station), the first terminal device may further send second indication information to the access network device, where the second indication information indicates the first carrier over which the SL RLF occurs. An implementation in which the second indication information indicates the first carrier over which the SL RLF occurs specifically includes: 1. The second indication information may directly include carrier information of the first carrier over which the SL RLF occurs, for example, may be information such as an identifier of the first carrier, an index of the first carrier, or a frequency channel number of the first carrier. This is not limited herein. Therefore, after receiving the second indication information from the first terminal device, the access network device may determine, based on the carrier information of the first carrier in the second indication information, the first carrier over which the SL RLF occurs. 2. The second indication information may alternatively include carrier information of an available carrier currently used by the first terminal device to send data to the second terminal device. Therefore, the access network device determines, based on the second indication information received from the first terminal device, that the available carrier does not include the first carrier. The access network device may alternatively determine, based on the second indication information received from the first terminal device, and with reference to carrier information that is in the second indication information previously received by the access network device and that is of the available carrier used by the first terminal device to send the data to the second terminal device, the first carrier over which the SL RLF occurs. For example, it is assumed that the second indication information previously received by the access network device includes a carrier 1, a carrier 2, and a carrier 3, and the second indication information currently received by the access network device includes the carrier 1 and the carrier 2. Therefore, the access network device may determine that the carrier 3 is a carrier over which the SL RLF occurs.

Optionally, in some implementations, in addition to sending the second indication information to the access network device, the first terminal device may further send information about the second terminal device to the access network device, for example, a layer-2 identifier (namely, a layer-2 ID) of the second terminal device. This is not limited herein.

It should be noted that the second indication information and/or the information about the second terminal device may be carried in a sidelink UE information new radio message (sidelinkUEInformationNR message) in 3GPP TS 38.331 or the like. This is not limited herein.

It should be noted that after receiving the second indication information and/or the information about the second terminal device, the access network device may send third indication information to a first access network device, where the third indication information indicates the first terminal device to delete or release the first carrier over which the SL RLF occurs. Therefore, that the first terminal device deletes or releases the first carrier may be understood as that the first terminal device deletes or releases the first carrier in response to the third indication information.

Optionally, in some implementations, after the first terminal device deletes or releases the first carrier, the access network device subsequently no longer schedules the first terminal device to send data to the second terminal device over the first carrier.

In this embodiment of this application, when the transmission with one PC5-RRC connection is performed over the plurality of carriers, statistics on PSFCH reception occasions related to transmission of each PSSCH/MAC PDU over each carrier may be collected together, to determine whether the SL RLF occurs on the PC5-RRC connection. Alternatively, when the transmission with one PC5-RRC connection is performed over the plurality of carriers, statistics on PSFCH reception occasions related to transmission of PSSCH/MAC PDUs over different carriers may be collected separately, to determine whether the SL RLF occurs over a specific carrier on the PC5-RRC connection. In other words, in this embodiment of this application, when the transmission with one PC5-RRC connection is performed over the plurality of carriers, whether the SL RLF occurs can be determined.

Further, when the first terminal device determines that the SL RLF occurs over the first carrier, the first terminal device sends the first indication information to the second terminal device, to notify the second terminal device to delete or release the first carrier over which the SL RLF occurs. This reduces unnecessary communication interruption caused in a conventional technology in which a PC5-RRC connection is directly released when an SL RLF is discovered. In other words, in embodiments of this application, the first carrier over which the SL RLF specifically occurs may be determined, and when the first carrier over which the SL RLF specifically occurs is determined, only the first carrier is deleted or released, and another carrier over which the SL RLF does not occur may still be used for normal communication between the first terminal device and the second terminal device. This improves communication reliability.

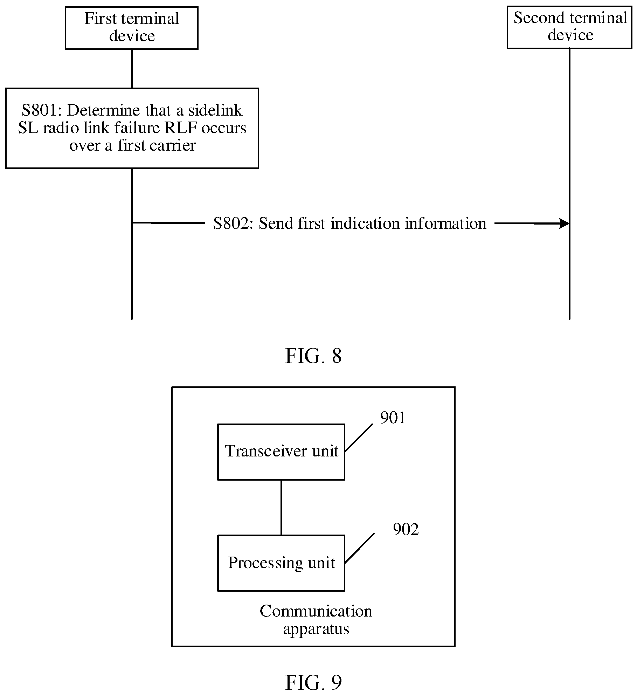

FIG. 8 is another schematic flowchart of a communication method according to an embodiment of this application. The method may be performed by a first terminal device, or may be performed by a chip in the first terminal device. For ease of description, in the following, the first terminal device and the chip in the first terminal device are collectively referred to as the first terminal device. The method shown in FIG. 8 may include the following operations.

S801: The first terminal device determines that a sidelink SL radio link failure RLF occurs over a first carrier.

In some implementations, the first terminal device determines that the sidelink SL radio link failure RLF occurs over the first carrier. The first carrier is any one or more of a plurality of carriers used by the first terminal device to send data to a second terminal device.

Specifically, that the first terminal device determines that the SL RLF occurs over the first carrier may be understood as that if the first terminal device determines, based on a first radio link control (radio link control, RLC) entity, that a quantity of data retransmissions reaches a maximum quantity of retransmissions, the first terminal device determines that the SL RLF occurs over the first carrier associated with the first RLC entity, where the first RLC entity is used by the first terminal device to send data to the second terminal device. It should be noted that the data transmitted by the first RLC entity may also be described as an RLC service data unit (service data unit, SDU). In other words, when the first RLC entity of the first terminal device determines that a quantity of RLC SDU retransmissions to a second RLC entity of the second terminal device reaches the maximum quantity of retransmissions, it means that the first RLC entity causes/incurs an SL RLF, or it means that a carrier (namely, the first carrier) associated with the first RLC entity causes/incurs an SL RLF. It should be noted that there may be one or more first carriers associated with the first RLC entity.

Further, that the first terminal device determines that the SL RLF occurs over the first carrier associated with the first RLC entity may be understood as that if the first terminal device determines, based on the first radio link control RLC entity, that the quantity of data retransmissions reaches the maximum quantity of retransmissions, and the first RLC entity is an RLC entity corresponding to a packet data convergence protocol (packet data convergence protocol, PDCP) entity that uses packet duplication, the first terminal device determines that the SL RLF occurs over the first carrier associated with the first RLC entity. It should be noted that, in a packet duplication scenario, transmission performed by the first RLC entity may be mapped to a carrier set (which may also be understood as that the transmission performed by the first RLC entity is mapped to a carrier set corresponding to a logical channel corresponding to the first RLC entity), where one carrier set includes one or more carriers. Therefore, the first terminal device may determine the one or more carriers in the carrier set associated with the first RLC entity as the first carrier, that is, as the one or more carriers over which the SL RLF occurs.

It should be noted that, in a scenario in which the first carrier includes the plurality of carriers, which may be understood as a scenario in which the first carrier associated with the first RLC entity includes the plurality of carriers, or understood as a scenario in which the carrier set associated with the first RLC entity includes the plurality of carriers, after the first terminal device determines that the SL RLF occurs over the first carrier (which may be understood as the first carrier associated with the first RLC entity, or understood as the carrier set associated with the first RLC entity), the first terminal device may further send first information to the second terminal device over each carrier in the first carrier, where the first information is used to trigger the second terminal device to feed back second information. If the first terminal device does not receive, over a second carrier, the second information sent by the second terminal device, or the first terminal device does not receive, over a second carrier within preset time after sending the first information, the second information sent by the second terminal device, the first terminal device determines that the SL RLF occurs over the second carrier, where the second carrier is any carrier in the first carrier. The first information may be information that triggers a channel state information (channel state information, CSI) feedback, or the first information may be a medium access control control element (medium access control control element, MAC CE), or the like. This is not limited herein. Correspondingly, the second information may be a CSI report, or the second information may be the MAC CE, or the like. This is not limited herein. In other words, in a scenario in which it is determined that the SL RLF occurs or in a scenario in which it is determined that the SL RLF occurs over the plurality of carriers, the first information and the second information may be further used to determine which carrier or carriers cause the SL RLF.

It should be noted that, if it can be specifically determined, from the first carrier, which carrier or carriers (namely, the second carrier) over which the SL RLF occurs, which carrier or carriers (namely, the second carrier) in the first carrier need to be released may be specifically indicated when a carrier is subsequently indicated to be released, so that a carrier over which the SL RLF does not occur in the first carrier is not released.

S802: The first terminal device sends first indication information to the second terminal device.

In some implementations, the first terminal device sends the first indication information to the second terminal device. Correspondingly, the second terminal device receives the first indication information from the first terminal device. The first indication information indicates that the SL RLF occurs over the first carrier, or the first indication information indicates to delete or release the first carrier. In other words, the second terminal device may delete or release the first carrier based on the first indication information. That the second terminal device deletes or releases the first carrier may be understood as at least one of the following: The second terminal device deletes the first carrier from carriers used by the second terminal device to receive data from the first terminal device; the second terminal device deletes the first carrier from carriers used by the second terminal device to send a feedback to the first terminal device; the second terminal device clears an SL grant (grant) that has been allocated to the first terminal device over the first carrier; and the second terminal device refreshes a HARQ buffer associated with the first carrier of the first terminal device.

Optionally, in some implementations, when the first terminal device determines the first carrier over which the SL RLF occurs, the first terminal device may further delete or release the first carrier. That the first terminal device deletes and/or releases the first carrier may be understood as at least one of the following: The first terminal device deletes the first carrier from carriers used by the first terminal device to send data to the second terminal device; the first terminal device deletes the first carrier from carriers used by the first terminal device to receive a feedback from the second terminal device; the first terminal device clears an SL grant (grant) that has been allocated to the second terminal device over the first carrier; and the first terminal device refreshes a HARQ buffer associated with the first carrier of the second terminal device.

Optionally, in some implementations, when the first carrier includes the plurality of carriers, if the plurality of carriers in the first carrier are all carriers corresponding to one RLC bearer, the first terminal device may suspend transmission performed by an RLC entity in the RLC bearer and a corresponding logical channel; or release the RLC entity in the RLC bearer and the corresponding logical channel; or map the logical channel corresponding to the RLC bearer to another carrier (or another one or more new carriers), and re-establish the RLC entity in the RLC bearer and the corresponding logical channel.

It should be noted that a new carrier in the another one or more new carriers may be a carrier mapped to another RLC entity originally corresponding to a same PDCP entity as the RLC entity, and the another RLC entity is no longer mapped to the new carrier. For example, if carriers to which the another RLC entity is originally mapped include a carrier 1 and a carrier 2, the RLC entity is now mapped to the carrier 1, and the another RLC entity is no longer mapped to the carrier 1. A new carrier in the another one or more new carriers may alternatively be a carrier other than a carrier mapped to another RLC entity corresponding to a same PDCP entity as the RLC entity. This is not limited herein.

Optionally, in some implementations, if the first terminal device is in RRC connected mode, and the plurality of carriers in the first carrier are all carriers corresponding to one RLC bearer, the first terminal device may further send fourth indication information to an access network device. The fourth indication information may indicate information about the RLC bearer. For example, the fourth indication information may include an RLC bearer configuration index and the like. This is not limited herein. Alternatively, the fourth indication information may indicate information about an RLC configuration, or the fourth indication information may indicate information about the logical channel, or the like. This is not limited herein. Therefore, after receiving the fourth indication information from the first terminal device, the access network device may determine, based on the information about the RLC bearer, the information about the RLC configuration, or the information about the logical channel in the fourth indication information, that all carriers corresponding to the RLC bearer or the logical channel are the first carrier over which the SL RLF occurs.

Optionally, in some implementations, in addition to sending the fourth indication information to the access network device, the first terminal device may further send information about the second terminal device to the access network device, for example, a layer-2 identifier (namely, a layer-2 ID) of the second terminal device. This is not limited herein.

It should be noted that the fourth indication information and/or the information about the second terminal device may be carried in a sidelinkUEInformationNR message. This is not limited herein.

It should be noted that, after receiving the fourth indication information and/or the information about the second terminal device, the access network device may further send fifth indication information to a first access network device, where the fifth indication information indicates the first terminal device to suspend the transmission performed by the RLC entity in the RLC bearer and the corresponding logical channel; or the fifth indication information indicates the first terminal device to release the RLC entity in the RLC bearer and the corresponding logical channel; or the fifth indication information indicates the first terminal device to map the logical channel corresponding to the RLC bearer to another carrier, and re-establish the RLC entity in the RLC bearer and the corresponding logical channel. Therefore, that the first terminal device may suspend the transmission performed by the RLC entity in the RLC bearer and the corresponding logical channel; or release the RLC entity in the RLC bearer and the corresponding logical channel; or map the logical channel corresponding to the RLC bearer to another carrier, and re-establish the RLC entity in the RLC bearer and the corresponding logical channel may be understood as that in response to the fifth indication information, the first terminal device suspends the transmission performed by the RLC entity in the RLC bearer and the corresponding logical channel; or in response to the fifth indication information, the first terminal device releases the RLC entity in the RLC bearer and the corresponding logical channel; or in response to the fifth indication information, the first terminal device maps the logical channel corresponding to the RLC bearer to another carrier, and re-establishes the RLC entity in the RLC bearer and the corresponding logical channel.

Optionally, the access network device may further send, to the first terminal device, information indicating to re-configure packet duplication, and/or the access network device may further send, to the first terminal device, information indicating to configure two carrier sets.

Optionally, the first terminal device may further send sixth indication information to the second terminal device. Correspondingly, the second terminal device receives the sixth indication information from the first terminal device. The sixth indication information indicates the information about the RLC bearer/RLC configuration/logical channel that causes the SL RLF. After receiving the sixth indication information, the second terminal device may delete/release a carrier corresponding to the RLC bearer/RLC configuration/logical channel indicated by the sixth indication information. A correspondence/mapping between the RLC bearer/RLC configuration/logical channel and the carrier may be obtained by the second terminal device previously. For example, the first terminal device configures the correspondence/mapping between the RLC bearer/RLC configuration/logical channel and the carrier for the second terminal device.

Optionally, the first terminal device may further send seventh indication information to the second terminal device. Correspondingly, the second terminal device receives the seventh indication information from the first terminal device. The seventh indication information indicates to configure/modify/update the correspondence/mapping between the RLC bearer/RLC configuration/logical channel and the carrier. The RLC bearer/RLC configuration/logical channel is an RLC that causes/incurs the SL RLF. The RLC bearer/RLC configuration/logical channel includes an RLC that causes/incurs the SL RLF, and another RLC corresponding to a same PDCP entity as the RLC that causes/incurs the SL RLF.

Optionally, the first terminal device may further delete/release the RLC bearer/RLC configuration/logical channel that causes/incurs the SL RLF. Optionally, the first terminal device may further send eighth indication information to the second terminal device. Correspondingly, the second terminal device receives the eighth indication information from the first terminal device. The eighth indication information indicates to configure/modify/update the RLC bearer/RLC configuration/logical channel corresponding to a PDCP entity/sidelink radio bearer SLRB, and/or delete/release the RLC bearer/RLC configuration/logical channel that causes/incurs the SL RLF.

Optionally, in some implementations, packet duplication is no longer used for the PDCP entity corresponding to the RLC bearer that causes/incurs the SL RLF.

Optionally, in some implementations, after the first terminal device deletes or releases the first carrier, the access network device subsequently no longer schedules the first terminal device to send data to the second terminal device over the first carrier.

In this embodiment of this application, when transmission with one PC5-RRC connection is performed over a plurality of carriers, the first terminal device can determine a specific carrier or specific carriers (namely, the first carrier) that cause the SL RLF. In addition, when it is determined that the SL RLF is caused by the first carrier, the PC5-RRC connection is not released, but only the first carrier is deleted or released, and another carrier over which the SL RLF does not occur may still be used for normal communication between the first terminal device and the second terminal device. This reduces unnecessary communication interruption caused when the SL RLF is detected, thereby improving communication reliability.

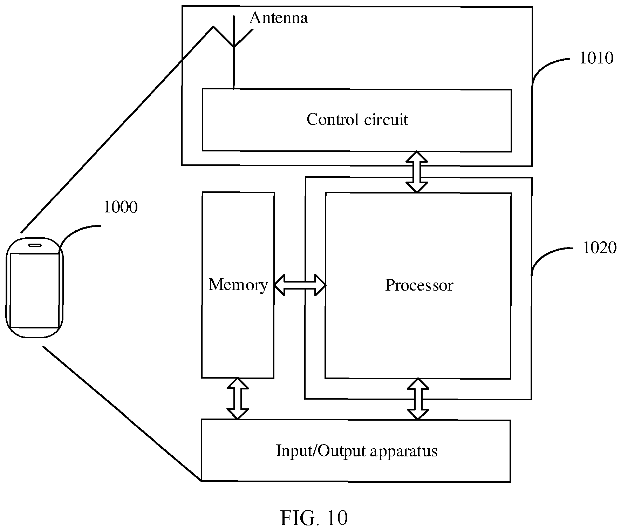

The following describes in detail communication apparatuses according to this application with reference to FIG. 9 and FIG. 10.

FIG. 9 is a diagram of a structure of a communication apparatus according to an embodiment of this application. The communication apparatus shown in FIG. 9 may be configured to perform some or all functions of the terminal device in the method embodiments described in FIG. 2 to FIG. 8. The apparatus may be a terminal device, an apparatus in the terminal device, or an apparatus that can be used together with the terminal device. The communication apparatus may alternatively be a chip system. The communication apparatus shown in FIG. 9 may include a transceiver unit 901 and a processing unit 902. The processing unit 902 is configured to perform data processing. The transceiver unit 901 is integrated with a receiving unit and a sending unit. The transceiver unit 901 may also be referred to as a communication unit. Alternatively, the transceiver unit 901 may be split into a receiving unit and a sending unit. The descriptions of the processing unit 902 below are similar to those of the transceiver unit 901, and details are not described below again. The details are as follows:

In a first implementation:
The transceiver unit 901 is configured to send data to a second terminal device over a plurality of carriers through a sidelink SL.

The processing unit 902 is configured to determine feedback reception situations for the data on feedback reception occasions over the plurality of carriers, where the feedback reception occasion is a feedback reception occasion for the data.

The processing unit 902 is configured to determine, based on the feedback reception situations, whether an SL radio link failure RLF occurs between a first terminal device and the second terminal device.

In a possible implementation, the processing unit 902 is configured to:
sequentially determine whether a feedback for the data is received on each feedback reception occasion over each of the plurality of carriers; and
if a first quantity of consecutive times that no feedback for the data is received over the plurality of carriers is greater than or equal to a first threshold, determine that the SL RLF occurs between the first terminal device and the second terminal device.

In a possible implementation, after the processing unit 902 sequentially determines whether the feedback for the data is received on each feedback reception occasion over each of the plurality of carriers, the processing unit 902 is further configured to:
if the first quantity of consecutive times that no feedback for the data is received over the plurality of carriers is less than the first threshold, and a feedback for the data is received on a next feedback reception occasion, set the first quantity to 0; or
if the first quantity of consecutive times that no feedback for the data is received over the plurality of carriers is less than the first threshold, and no feedback for the data is received on a next feedback reception occasion, add the first quantity by 1.

In a possible implementation, the processing unit 902 is configured to:
sequentially determine whether a feedback for the data is received on each feedback reception occasion over a first carrier, where the first carrier is any one of the plurality of carriers; and
if a second quantity of consecutive times that no feedback for the data is received over the first carrier is greater than or equal to a second threshold, determine that the SL RLF occurs between the first terminal device and the second terminal device over the first carrier.

In a possible implementation, after the processing unit 902 sequentially determines whether the feedback for the data is received on each feedback reception occasion over each of the plurality of carriers, the processing unit 902 is further configured to:
if the second quantity of consecutive times that no feedback for the data is received over the first carrier is less than the second threshold, and a feedback for the data is received on a next feedback reception occasion, set the second quantity to 0; or
if the second quantity of consecutive times that no feedback for the data is received over the first carrier is less than the second threshold, and no feedback for the data is received on a next feedback reception occasion, add the second quantity by 1.

In a possible implementation, the processing unit 902 is configured to:
sequentially determine whether a feedback for first data sent over a first carrier is received on each feedback reception occasion for the first data, where the first carrier is any one of the plurality of carriers; and
if a third quantity of consecutive times that no feedback for the first data is received is greater than or equal to a third threshold, determine that the SL RLF occurs between the first terminal device and the second terminal device over the first carrier.

In a possible implementation, after the processing unit 902 sequentially determines whether the feedback for the data is received on each feedback reception occasion over each of the plurality of carriers, the processing unit 902 is further configured to:
if the third quantity of consecutive times that no feedback for the first data is received over the first carrier is less than the third threshold, and a feedback for the first data is received on a next feedback reception occasion for the first data, set the third quantity to 0; or
if the third quantity of consecutive times that no feedback for the first data is received over the first carrier is less than the third threshold, and no feedback for the first data is received on a next feedback reception occasion for the first data, add the third quantity by 1.

In a possible implementation, the transceiver unit 901 is further configured to:
send first indication information to the second terminal device, where the first indication information indicates that the SL RLF occurs over the first carrier, or the first indication information indicates to delete or release the first carrier.

In a possible implementation, the processing unit 902 is further configured to: delete or release the first carrier.

In a possible implementation, the transceiver unit 901 is further configured to:
send second indication information to an access network device, where the second indication information indicates that the SL RLF occurs over the first carrier.

In a second implementation:
The processing unit 902 is configured to determine that a sidelink SL radio link failure RLF occurs over a first carrier, where the first carrier is any one or more of a plurality of carriers used by a first terminal device to send data to a second terminal device.

The transceiver unit 901 is configured to send first indication information to the second terminal device, where the first indication information indicates the first carrier, or the first indication information indicates to delete or release the first carrier.

In a possible implementation, the processing unit 902 is configured to:
if a quantity of data retransmissions determined based on a first radio link control RLC entity reaches a maximum quantity of retransmissions, determine that the SL RLF occurs over the first carrier associated with the first RLC entity, where the first terminal device sends the data to the second terminal device through the first RLC entity.

In a possible implementation, the processing unit 902 is configured to:
if the quantity of data retransmissions determined based on the first radio link control RLC entity reaches the maximum quantity of retransmissions, and the first RLC entity is an RLC entity corresponding to a packet data convergence protocol PDCP entity that uses packet duplication, determine that the SL RLF occurs over the first carrier associated with the first RLC entity.

In a possible implementation, the first carrier includes a plurality of carriers; and after the processing unit 902 determines that the SL RLF occurs over the first carrier, the processing unit 902 is further configured to:
send first information to the second terminal device over each carrier in the first carrier, where the first information is used to trigger the second terminal device to feed back second information; and
if the second information sent by the second terminal device is not received over a second carrier, determine that the SL RLF occurs over the second carrier, where the second carrier is any carrier in the first carrier.

In a possible implementation, the processing unit 902 is further configured to: delete or release the first carrier.

In a possible implementation, the transceiver unit 901 is further configured to:
send second indication information to an access network device, where the second indication information indicates that the SL RLF occurs over the first carrier.

For another possible implementation of the communication apparatus, refer to the related descriptions of the functions of the terminal device in the method embodiments corresponding to FIG. 2 to FIG. 8. Details are not described herein again.

FIG. 10 is a diagram of a structure of another communication apparatus according to an embodiment of this application. As shown in FIG. 10, the communication apparatus may be the terminal device (for example, the first terminal device or the second terminal device) described in embodiments of this application, and is configured to implement the functions of the terminal device in FIG. 2 to FIG. 8. For ease of description, FIG. 10 shows only main components of a terminal device 1000. As shown in FIG. 10, the terminal device 1000 includes a processor, a memory, a control circuit, an antenna, and an input/output apparatus. The processor is mainly configured to process a communication protocol and communication data, control the entire terminal device 1000, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 1000 is a mobile phone. After the terminal device 1000 is powered on, the processor may read a software program in a storage unit, interpret and execute instructions of the software program, and process data of the software program. When data needs to be sent wirelessly, after performing baseband processing on the to-be-sent data, the processor outputs a baseband signal to the control circuit; and after performing radio frequency processing on the baseband signal, the control circuit sends a radio frequency signal in a form of an electromagnetic wave through the antenna. When data is sent to the terminal device 1000, the control circuit receives a radio frequency signal through the antenna, converts the radio frequency signal into a baseband signal, and outputs the baseband signal to the processor; and the processor converts the baseband signal into data, and processes the data.

A person skilled in the art may understand that, for ease of description, FIG. 10 shows only one memory and only one processor. In some embodiments, the terminal device 1000 may include a plurality of processors and a plurality of memories. The memory may also be referred to as a storage medium, a storage device, or the like. This is not limited in this embodiment of the present invention.

In an optional implementation, the processor may include a baseband processor and a central processing unit. The baseband processor is mainly configured to process a communication protocol and communication data, and the central processing unit is mainly configured to control the entire terminal device 1000, execute a software program, and process data of the software program. The processor in FIG. 10 integrates functions of the baseband processor and the central processing unit. A person skilled in the art may understand that the baseband processor and the central processing unit may alternatively be processors independent of each other, and are connected to each other by using a technology like a bus. The terminal device 1000 may include a plurality of baseband processors to adapt to different network standards, the terminal device 1000 may include a plurality of central processing units to enhance a processing capability of the terminal device, and components of the terminal device 1000 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have receiving and sending functions may be considered as a transceiver unit 1010 of the terminal device 1000, and the processor having a processing function may be considered as a processing unit 1020 of the terminal device 1000. As shown in FIG. 10, the terminal device 1000 includes the transceiver unit 1010 and the processing unit 1020. The transceiver unit may also be referred to as a transceiver, a transceiver machine, a transceiver apparatus, or the like. Optionally, a component that is in the transceiver unit 1010 and that is configured to implement a receiving function may be considered as a receiving unit, and a component that is in the transceiver unit 1010 and that is configured to implement a sending function may be considered as a sending unit. In other words, the transceiver unit 1010 includes the receiving unit and the sending unit. For example, the receiving unit may also be referred to as a receiving machine, a receiver, a receiving circuit, or the like, and the sending unit may also be referred to as a transmitting machine, a transmitter, a transmitting circuit, or the like.

An embodiment of this application further provides a computer-readable storage medium. The computer-readable storage medium stores instructions. When the instructions are run on a processor, method procedures in the foregoing method embodiments are implemented.

An embodiment of this application further provides a computer program product. When the computer program product runs on a processor, method procedures in the foregoing method embodiments are implemented.

A person of ordinary skill in the art may be aware that, in combination with the examples described in embodiments disclosed in this specification, units and steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in another manner. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on an actual requirement to achieve the objectives of the solutions of embodiments.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The computer-readable storage medium may be any usable medium that can be accessed by a computer. For example, the computer-readable medium may include but is not limited to: a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM), a universal serial bus flash disk (universal serial bus flash disk), a removable hard disk, another optical disc memory, a magnetic disk storage medium, or another magnetic storage device, or any other medium that can be used to carry or store expected program code in a form of an instruction or a data structure and that can be accessed by a computer. In addition, by way of example and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applied to a first terminal device, and comprises:
sending data to a second terminal device over a plurality of carriers through a sidelink SL;
determining feedback reception situations for the data on feedback reception occasions over the plurality of carriers, wherein the feedback reception occasion is a feedback reception occasion for the data; and
determining, based on the feedback reception situations, whether an SL radio link failure RLF occurs between the first terminal device and the second terminal device.

2. The method according to claim 1, wherein the determining feedback reception situations for the data on feedback reception occasions over the plurality of carriers comprises:
sequentially determining whether a feedback for the data is received on each feedback reception occasion over each of the plurality of carriers; and
the determining, based on the feedback reception situations, whether an SL RLF occurs between the first terminal device and the second terminal device comprises:
if a first quantity of consecutive times that no feedback for the data is received over the plurality of carriers is greater than or equal to a first threshold, determining that the SL RLF occurs between the first terminal device and the second terminal device.

3. The method according to claim 2, wherein after the sequentially determining whether a feedback for the data is received on each feedback reception occasion over each of the plurality of carriers, the method further comprises:
if the first quantity of consecutive times that no feedback for the data is received over the plurality of carriers is less than the first threshold, and a feedback for the data is received on a next feedback reception occasion, setting the first quantity to 0; or
if the first quantity of consecutive times that no feedback for the data is received over the plurality of carriers is less than the first threshold, and no feedback for the data is received on a next feedback reception occasion, adding the first quantity by 1.

4. The method according to claim 1, wherein the determining feedback reception situations for the data on feedback reception occasions over the plurality of carriers comprises:
sequentially determining whether a feedback for the data is received on each feedback reception occasion over a first carrier, wherein the first carrier is any one of the plurality of carriers; and
the determining, based on the feedback reception situations, whether an SL RLF occurs between the first terminal device and the second terminal device comprises:
if a second quantity of consecutive times that no feedback for the data is received over the first carrier is greater than or equal to a second threshold, determining that the SL RLF occurs between the first terminal device and the second terminal device over the first carrier.

5. The method according to claim 4, wherein after the sequentially determining whether a feedback for the data is received on each feedback reception occasion over a first carrier, the method further comprises:
if the second quantity of consecutive times that no feedback for the data is received over the first carrier is less than the second threshold, and a feedback for the data is received on a next feedback reception occasion, setting the second quantity to 0; or
if the second quantity of consecutive times that no feedback for the data is received over the first carrier is less than the second threshold, and no feedback for the data is received on a next feedback reception occasion, adding the second quantity by 1.

6. The method according to claim 1, wherein the determining feedback reception situations for the data on feedback reception occasions over the plurality of carriers comprises:
sequentially determining whether a feedback for first data sent over a first carrier is received on each feedback reception occasion for the first data, wherein the first carrier is any one of the plurality of carriers; and
the determining, based on the feedback reception situations, whether an SL RLF occurs between the first terminal device and the second terminal device comprises:
if a third quantity of consecutive times that no feedback for the first data is received is greater than or equal to a third threshold, determining that the SL RLF occurs between the first terminal device and the second terminal device over the first carrier.

7. The method according to claim 6, wherein after the sequentially determining whether a feedback for first data sent over a first carrier is received on each feedback reception occasion for the first data, the method further comprises:
if the third quantity of consecutive times that no feedback for the first data is received over the first carrier is less than the third threshold, and a feedback for the first data is received on a next feedback reception occasion for the first data, setting the third quantity to 0; or
if the third quantity of consecutive times that no feedback for the first data is received over the first carrier is less than the third threshold, and no feedback for the first data is received on a next feedback reception occasion for the first data, adding the third quantity by 1.

8. The method according to any one of claims 4 to 7, wherein the method further comprises:
sending first indication information to the second terminal device, wherein the first indication information indicates that the SL RLF occurs over the first carrier, or the first indication information indicates to delete or release the first carrier.

9. The method according to any one of claims 4 to 8, wherein the method further comprises: deleting or releasing the first carrier.

10. The method according to any one of claims 4 to 9, wherein the method further comprises:
sending second indication information to an access network device, wherein the second indication information indicates that the SL RLF occurs over the first carrier.

11. A communication method, wherein the method is applied to a first terminal device, and comprises:
determining that a sidelink SL radio link failure RLF occurs over a first carrier, wherein the first carrier is any one or more of a plurality of carriers used by the first terminal device to send data to a second terminal device; and
sending first indication information to the second terminal device, wherein the first indication information indicates the first carrier, or the first indication information indicates to delete or release the first carrier.

12. The method according to claim 11, wherein the determining that an SL RLF occurs over a first carrier comprises:
if a quantity of data retransmissions determined based on a first radio link control RLC entity reaches a maximum quantity of retransmissions, determining that the SL RLF occurs over the first carrier associated with the first RLC entity, wherein the first terminal device sends the data to the second terminal device through the first RLC entity.

13. The method according to claim 12, wherein the determining that the SL RLF occurs over the first carrier associated with the first RLC entity comprises:
if the quantity of data retransmissions determined based on the first radio link control RLC entity reaches the maximum quantity of retransmissions, and the first RLC entity is an RLC entity corresponding to a packet data convergence protocol PDCP entity that uses packet duplication, determining that the SL RLF occurs over the first carrier associated with the first RLC entity.

14. The method according to any one of claims 11 to 13, wherein the first carrier comprises a plurality of carriers; and after the determining that an SL RLF occurs over a first carrier, the method further comprises:
sending first information to the second terminal device over each carrier in the first carrier, wherein the first information is used to trigger the second terminal device to feed back second information; and
if the second information sent by the second terminal device is not received over a second carrier, determining that the SL RLF occurs over the second carrier, wherein the second carrier is any carrier in the first carrier.

15. The method according to any one of claims 11 to 14, wherein the method further comprises:
deleting or releasing the first carrier.

16. The method according to any one of claims 11 to 15, wherein the method further comprises:
sending second indication information to an access network device, wherein the second indication information indicates that the SL RLF occurs over the first carrier.

17. A communication apparatus, comprising units or modules configured to perform the method according to any one of claims 1 to 10, or comprising units or modules configured to perform the method according to any one of claims 11 to 16.

18. A communication apparatus, comprising a processor and a communication interface, wherein the communication interface is configured to: receive a signal from a communication apparatus other than the communication apparatus and transmit the signal to the processor, or send a signal from the processor to a communication apparatus other than the communication apparatus; and the processor is configured to enable, by using a logic circuit or by executing code instructions, the communication apparatus to implement the method according to any one of claims 1 to 10 or claims 11 to 16.

19. A non-transitory computer-readable storage medium, wherein the non-transitory storage medium stores a computer program or instructions; and when the computer program or the instructions are executed by a computer, the method according to any one of claims 1 to 10 or claims 11 to 16 is implemented.

20. A computer program product, comprising computer program code, wherein when the computer program code is run on a computer, the method according to any one of claims 1 to 10 or claims 11 to 16 is implemented.
